# EUROPÄISCHE PATENTSCHRIFT

(11) **EP 3 243 575 B1**
(45) Veröffentlichungstag und Bekanntmachung des Hinweises auf die Patenterteilung: **20.07.2022**
(21) Anmeldenummer: 17170431.5
(22) Anmeldetag: 10.05.2017
(51) Int. Cl.: B07C 5/00, G01N 23/223

(54) **VORRICHTUNG ZUR SORTIERUNG VON MATERIALIEN, INSBESONDERE SCHROTTPARTIKELN, MITTELS RÖNTGENFLUORESZENZ**
APPARATUS FOR SORTING MATERIALS, IN PARTICULAR SCRAP PARTICLES, USING X-RAY FLUORESCENCE
DISPOSITIF DE TRI DE MATÉRIAUX, EN PARTICULIER DE PARTICULES DE FERRAILLES, AU MOYEN DE LA FLUORESCENCE AUX RAYONS X

(30) Priorität: 13.05.2016 DE 102016208320
(43) Veröffentlichungstag der Anmeldung: 15.11.2017
(73) Patentinhaber: Bruker AXS GmbH, 76187 Karlsruhe (DE)
(72) Erfinder: LÖFFLER, Rainer, 76593 Gernsbach (DE); FINK, Jürgen, 76477 Elchesheim-Illingen (DE)
(74) Vertreter: Kohler Schmid Möbus Patentanwälte

(56) Entgegenhaltungen:
- US-A1- 2007 030 953
- US-B1- 7 763 820
- US-B2- 7 138 637
- US-B2- 8 855 809
- WIACEK P ET AL: "Position sensitive and energy dispersive x-ray detector based on silicon strip detector technology", JOURNAL OF INSTRUMENTATION, INSTITUTE OF PHYSICS PUBLISHING, BRISTOL, GB, Bd. 10, Nr. 4, 7. April 2015 (2015-04-07), XP020282528, ISSN: 1748-0221, DOI: 10.1088/1748-0221/10/04/P04002 [gefunden am 2015-04-07]
- M.C. VEALE ET AL: "Measurements of charge sharing in small pixel CdTe detectors", NUCLEAR INSTRUMENTS & METHODS IN PHYSICS RESEARCH. SECTION A: ACCELERATORS, SPECTROMETERS, DETECTORS, AND ASSOCIATED EQUIPMENT, Bd. 767, Dezember 2014 (2014-12), Seiten 218-226, XP055398717, NL ISSN: 0168-9002, DOI: 10.1016/j.nima.2014.08.036
- SCHMITT B ET AL: "Mythen detector system", NUCLEAR INSTRUMENTS & METHODS IN PHYSICS RESEARCH. SECTION A: ACCELERATORS, SPECTROMETERS, DETECTORS, AND ASSOCIATED EQUIP, ELSEVIER BV * NORTH-HOLLAND, NL, Bd. 501, Nr. 1, 21. März 2003 (2003-03-21) , Seiten 267-272, XP004420435, ISSN: 0168-9002, DOI: 10.1016/S0168-9002(02)02045-4

## Beschreibung

Die Erfindung betrifft eine Vorrichtung zur Identifizierung von Materialien, insbesondere Metallteilen wie Schrottpartikeln, auf einem ruhenden oder bewegten Fließband mittels Röntgenfluoreszenz mit einer Röntgen-Quelle, von der Röntgen-Strahlung auf die zu untersuchenden Materialteile auf dem Fließband geführt wird, mit einem Detektorkopf, der ein Röntgen-Detektor-Array enthält, das eine Vielzahl von flächig angeordneten Detektorelementen zum Empfang von an den Materialteilen gestreuter oder von diesen angeregter Röntgen-Strahlung und deren Umwandlung in elektrische Ladungssignale aufweist, sowie eine elektronische Einrichtung zum Auslesen und Verarbeiten der Ladungssignale aus den Detektorelementen, die für jedes einzelne Detektorelement des Röntgen-Detektor-Arrays einen Signalkanal umfasst, der jeweils aufweist:
- eine Diskriminatoreinrichtung mit mindestens zwei einstellbaren Komparatorschwellen zur Detektion aller Gaußkurven-artigen Signale, deren Amplitude größer ist als eine der beiden oder zeitgleich größer als beide Komparatorschwellen,
- sowie eine Zählereinheit je Komparatorschwelle zur Umwandlung der analogen Gaußkurven-artigen Signale in digitale Zählereignisse.

Eine Sortiervorrichtung mit diesen Merkmalen ist bekannt aus US 8,855,809 B2 (=Referenz [1]).

### Hintergrund der Erfindung

Messungen mit Röntgenfluoreszenz sind leistungsfähige Verfahren der instrumentellen Analytik, mit denen die Detektion und Charakterisierung von insbesondere metallischen Materialien erfolgen kann. Je nach analytischer Aufgabenstellung kommen verschiedene Messgeometrien zum Einsatz.

Für gewöhnlich bestrahlt eine Röntgenquelle Material, welches auf einem ruhenden oder bewegten Fließband liegt, mit Röntgenstrahlung. Die dabei erzeugte Röntgenfluoreszenzstrahlung wird üblicherweise über eine Kollimationseinrichtung geleitet und trifft anschließend auf einen einzelnen Röntgenstrahlungsdetektor oder auf ein Röntgen-Detektor-Array. Ein solches Array kann sich aus mehreren diskreten Röntgenstrahlungsdetektoren zusammensetzen oder wird durch eine Vielzahl an einzelnen Detektorelementen gebildet, welche gewöhnlicher Weise auf einem monolithischen Halbleitersubstrat angeordnet sind. Möglich ist auch die gleichzeitige Kombination aus diskreten und monolithischen Detektoren. In der Regel hat ein solches Detektionssystem die Aufgabe, die chemische Zusammensetzung der auf einem bewegten Fließband bewegten Materialien zu bestimmen und zu überwachen, beziehungsweise die exakte Ortsposition von Materialien auf dem Fließband zu ermitteln, die über eine vorgegebene chemische Zusammensetzung verfügen.

### Stand der Technik

Die eingangs zitierte Referenz [1] beschreibt eine gattungsgemäße Material-Sortiervorrichtung auf der Basis von Röntgenfluoreszenz-Messungen mit diversen unterschiedlichen Arten von Detektorelementen des Röntgen-Detektor-Arrays:
Referenz [1] benennt Röntgen-Detektor-Arrays, welche auf den Sensormaterialien CdT (Cadmiumtellurid) und CZT (Cadmiumzinktellurid) beziehungsweise den Detektortechnologien SiLi (Lithium-gedriftete Siliziumdetektoren), SDD (Siliziumdriftdetektoren) und Phosphor-auf-Silizium beruhen. Insbesondere werden die Detektortypen Si-Pin und XR-100T-CZT der Firma Amptek und das so genannte NEXIS-System der Firma Nova R&D angeführt.

Die in Referenz [1] genannten Detektionstechnologien zeichnen sich durch individuelle Stärken aus. So besitzt beispielsweise das NEXIS-System eine hohe Ortsauflösung und kann die Ortsposition einzelner Materialien relativ präzise bestimmen. Dies wird durch den geringen Abstand seiner einzelnen Detektorelemente von 1 mm erreicht. Zudem verfügt dieser Detektor über einen sehr großen Dynamikbereich. Jedes einzelne Detektorelement kann Strahlungsintensitäten in der Größenordnung von bis zu 10⁶ Röntgenphotonen pro Sekunde verarbeiten. Allerdings besitzt das NEXIS-System eine relativ schlechte Energieauflösung von mehreren 1000eV (FWHM) und ist deshalb nicht in der Lage, chemische Elemente, deren Fluoreszenzspektren energetisch eng zusammenliegen, analytisch zu trennen. Zudem ist das NEXIS-System insbesondere in Verbindung mit den Detektormaterialien CdT und CZT für eine Röntgenfluoreszenzanalyse im Energiebereich kleiner als 20keV nur sehr eingeschränkt geeignet.

Andere in Referenz [1] angeführten Detektoren basieren auf den Technologien Si-Pin, SiLi und SDD und verfügen über beste Energieauflösungen von weniger als 150eV@5.9keV (FWHW). Sie sind in der Lage, die Röntgenfluoreszenzspektren verschiedener chemischer Elemente im Energiebereich von 1keV bis zu gewöhnlicher Weise 30keV präzise zu analysieren. Allerdings ist die nutzbare globale Zählrate eines solchen Röntgenstrahlungsdetektors begrenzt und viel kleiner als beim NEXIS-System. In der Praxis werden Detektorarrays basierend auf den Technologien Si-Pin, SiLi oder SDD in der Regel aus diskreten Einzeldetektoren zusammengesetzt. Dabei hat jeder Einzeldetektor eine aktive Fläche von mehreren Quadratmillimetern. Deshalb ist die bei solchen Konfigurationen erzielbare Ortsauflösung von Materialien um eine oder mehrere Größenordnungen schlechter als beim NEXIS-System. Auf Grundlage dieser Detektortechnologien gibt es auch monolithische Lösungen mit mehreren Detektorelementen auf einem einzigen Halbleitersubstrat. Allerdings sind auch hier die einzelnen Detektorelemente mindestens mehrere Millimeter weit voneinander entfernt. Zudem erfordern die Technologien Si-Pin, SiLi und SDD eine sehr aufwendige Kühlung des Sensors auf Temperaturen deutlich kleiner als -10°C.

Für Anwendungen, bei welchen gleichzeitig eine hohe Energieauflösung sowie ein hoher Dynamikbereich und eine hohe Ortsauflösung erforderlich sind, schlägt Referenz [1] die Bildung von hybriden Röntgen-Detektor-Arrays vor, welche aus Detektoren verschiedenartiger Detektortechnologien zusammengesetzt sind. Insbesondere benennt das Patent hybride Detektor-Arrays, die sich aus Kombinationen basierend auf CdT-, CZT-, Si(li) und SDD-Detektoren zusammensetzen. Allerdings lösen solche hybriden Detektorarrays nur wenige der zuvor für die einzelnen Detektortechnologien genannten Unzulänglichkeiten.

Für alle in Referenz [1] genannten Röntgendetektionsanordnungen gelten folgende Nachteile:
- Materialien unterschiedlicher chemischer Zusammensetzung, deren Röntgenfluoreszenzstrahlung mit einer hohen Energieauflösung detektiert und deren chemische Zusammensetzung präzise identifiziert worden ist, können nur mit einer relativ großen örtlichen Unsicherheit auf dem Fließband lokalisiert werden.
- Materialien unterschiedlicher chemischer Zusammensetzung, deren Lage auf dem Fließband mit einem gut ortsauflösenden Detektor auf dem Fließband relativ präzise lokalisiert worden sind, können hinsichtlich ihrer chemischen Zusammensetzung nicht oder nur mit beschränkter Genauigkeit identifiziert werden, da der hierzu verwendete Detektor eine zu schlechte Energieauflösung besitzt.
- Da die genannten Detektoren, welche über eine hohe Energieauflösung verfügen, nur einen relativ begrenzten lokalen und globalen ZählratenDynamikbereich besitzen, muss die Intensität der Röntgenfluoreszenzstrahlung auf relativ niedrige Werte begrenzt werden, damit es zu keiner Sättigung in den Strahlungsdetektoren bei stark variierenden Materialzusammensetzungen kommt. Dieser Sachverhalt hat direkten Einfluss auf die erreichbare Zählstatistik und die maximal möglichen Fließbandgeschwindigkeiten.
- Für den Energiebereich von 0 bis 20 keV benennt die Referenz [1] keine geeignete Detektortechnologie, welche über ein hohes Ortsauflösungsvermögen verfügt. Die für diesen Energiebereich vorgeschlagenen Detektoren Si-Pin, SiLi und SDD besitzen eine sehr gute Energieauflösung, können die Ortsposition von Materialien aber nur grob detektieren.
- Die angeführten Detektoren mit hoher Energieauflösung (Si-Pin, Si-Li und SDD) erfordern eine aufwendige und im realen Betrieb möglicherweise anfällige Kühlung der Detektorelemente.

In der Fachliteratur sind zahlreiche Detektorarray-Anordnungen zu finden, die über eine sehr gute Ortsauflösung verfügen und zudem für Photonenenergien kleiner als 20keV geeignet sind. Unter anderem werden solche Detektoren in ""Semiconductor Radiation Detectors", Gerhard Lutz, ISBN 3-540-64859-3 (=Referenz [2]) beschrieben.

Ein Beispiel für ein kommerziell eingesetztes Produkt ist der MYTHEN-Detektor, welcher vom PSI Paul Scherrer Institut, Schweiz entwickelt wurde ("Mythen detector system", B. Schmitt et al, Nuclear Instruments and Methods in Physics Research A 501 (2003) 267-272 =Referenz [3]). Der Abstand der einzelnen Detektorelemente beträgt beim MYTHEN-Detektor beispielsweise 50µm.

Allerdings sind diese genannten Detektorarray-Anordnungen für den Einsatz in einer Vorrichtung zur Identifizierung von Materialien nur sehr begrenzt einsetzbar. Zum einen besitzen diese Detektorarray-Anordnungen gewöhnlicher Weise nur eine Energieauflösung in der Größenordnung von 1000eV (FWHM) oder darüber. Für viele technisch relevante Materialanalyseaufgaben reicht diese Energieauflösung nicht aus.

Zum anderen tritt bei solchen Detektoren -durch den Sensoraufbau bedingtder so genannte Charge-Sharing-Effekt auf. Der Effekt beschreibt den Umstand, dass es sein kann, dass Ladungsträger, welche von einem einzelnen Röntgenphoton erzeugt werden, nicht in ihrer Gesamtheit von einem einzigen Detektorelement aufgenommen werden, sondern in Teilmengen von benachbarten Detektorelementen erfasst werden. Der Charge-Sharing-Effekt ist umso stärker, je kleiner die einzelnen Detektorelemente strukturiert sind. Enthält eine zu untersuchende Materialprobe nur ein einziges chemisches Element, dann führt Charge Sharing dazu, dass die Energieverteilung der detektierten Röntgenfluoreszenzstrahlung nicht mehr Gaußkurven-artig ist, sondern stark unsymmetrisch wird und niederenergetische Anteile aufweist. Enthalten Materialien mehrere chemische Elemente, wie dies bei Vorrichtungen zur Materialidentifikation gewöhnlicher Weise stets der Fall ist, dann bewirkt Charge Sharing, dass sich die einzelnen Röntgenfluoreszenzspektren energetisch überlagern und sich wechselseitig stark beeinflussen. Die tatsächliche Stärke der durch Charge-Sharing erzeugten Anteile im Energiespektrum hängt von vielen Einflussgrößen ab. Es kommt insbesondere zu starken Schwankungen der durch Charge Sharing erzeugten Energieanteile, wenn eine Materialprobe mehrere chemische Elemente enthält, deren Konzentrationen sich zudem örtlich und zeitlich ändern. Eine energetisch hoch aufgelöste sowie präzise und reproduzierbare Materialanalyse mittels Röntgenfluoreszenzstrahlung ist deshalb mit solchen Detektoren nahezu nicht möglich.

Demgegenüber ist aus "Position sensitive and energy dispersive x-ray detector based on silicon strip detector technology", P. Wi 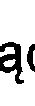 cek et al 2015 JINST 10 P04002 (=Referenz [4]) eine Detektionsanordnung bekannt, welche für Anwendungen in der Röntgendiffraktometrie entwickelt wurde. Als kommerzielles Produkt ist die Anordnung unter dem Handelsnamen "LYNXEYE XE-T" bekannt. Während sich bei Vorrichtungen zur Materialanalyse gewöhnlicher Weise die Röntgenfluoreszenzspektren einer Vielzahl chemischer Elemente gleichzeitig überlagern, liegt in der Röntgendiffraktometrie am Ort eines Detektorelementes eine quasi-monochromatische Röntgenstrahlung vor. Für Diffraktometrie-Anwendungen ist es von großer Bedeutung, dass K-Alpha und K-Beta Röntgenstrahlungsanteile sicher separiert werden können. Der in Referenz [4] beschriebene Röntgendetektor ermöglicht es, diese Strahlenanteile allein mittels elektronischer Diskriminierung vollständig zu trennen. Beispielsweise werden in der Diffraktometrie sehr oft Röntgenröhren mit einer Cu-Anode eingesetzt. Der Detektor ist bei solchen Systemen in der Lage, Cu-K-Alpha Röntgenstrahlung (8.04keV) von Cu-K-Beta Röntgenstrahlung (8.9 keV) präzise zu unterscheiden, und zwar ohne die zu Hilfenahme von K-Beta Strahlengangfilter (Ni-Filter) oder so genannten Sekundärmonochromatoren.

### Aufgabe der Erfindung

Der vorliegenden Erfindung liegt demgegenüber die Aufgabe zugrunde, eine Vorrichtung der eingangs definierten Art vorzustellen, mit welcher einzelne Partikel eines Materials, welche sich auf einem ruhenden oder bewegten Fließband befinden, mittels Röntgenfluoreszenz und mit einer Energieauflösung von besser als 500eV (FWHM, bezogen auf eine Energie von 8.04keV) präzise identifiziert werden können. Überlagern sich hierbei die Energiespektren mehrerer einzelner chemischer Elemente, dann müssen diese von der Detektionseinrichtung präzise separiert werden können und es dürfen sich die Einzelspektren nicht wechselseitig beeinflussen. Zusätzlich zur chemischen Identifikation soll die Vorrichtung zeitgleich in der Lage sein, eine örtlich hochaufgelöste Positionsbestimmung der einzelnen Materialpartikel zu ermöglichen. Insbesondere sollen einzelne Materialpartikel mit einer Ortsauflösung von bis zu besser als 50µm lokalisiert werden können. Diese Ortsauflösung soll sowohl in Fließbandrichtung als auch orthogonal zur Fließbandrichtung erreicht werden. Die Vorrichtung muss zudem zeitgleich über einen großen Zählratendynamikbereich verfügen, um Materialproben identifizieren und lokalisieren zu können, deren chemische Zusammensetzungen sich örtlich und zeitlich stark ändern.

### Kurze Beschreibung der Erfindung

Diese Aufgabe wird auf ebenso überraschend einfache wie wirkungsvolle Weise sowie mit ohne Weiteres zur Verfügung stehenden technischen Mitteln dadurch gelöst, dass die einzelnen Detektorelemente des Röntgen-Detektor-Arrays eine Ortsauflösung von 50µm bis 500µm bei einer Sensitivität für Röntgenstrahlung in einem Energiebereich zwischen 500eV und 30keV, bei einer Energieauflösung von weniger als 0,5keV (FWHM) bei Zählraten von bis zu 100kcps und bezogen auf eine Energie von 8,04keV aufweisen, dass die elektronische Einrichtung für jedes einzelne Detektorelement des Röntgen-Detektor-Arrays einen Signalkanal umfasst (der bevorzugt jeweils einen Basislinien-Restorer zur Erhaltung der 0V-Basislinie auch bei hohen und zudem zeitlich sich ändernden Strahlungsintensitäten aufweist), und dass jede Diskriminatoreinrichtung für ein bestimmtes Detektorelement jeweils mit den Diskriminatoreinrichtungen der diesem Detektorelement räumlich unmittelbar benachbarten Detektorelemente elektrisch verbunden ist, wobei sämtliche Diskriminatoreinrichtungen über eine digitale und/oder analoge Schaltung derart miteinander verschaltet sind, dass ein simultanes Auftreten von Signalen auf mehr als einem Detektorelement erkannt und elektrisch gesondert behandelt werden kann.

### Wirkungsweise der Erfindung

Die Erfindung offenbart eine Vorrichtung zur Identifizierung von Materialien, insbesondere Metallteilen wie Schrottpartikeln, auf einem Fließband mittels Röntgenfluoreszenz entsprechend dem unabhängigen Anspruch 1.

Im Besonderen verfügt die erfindungsgemäß eingesetzte Detektionsanordnung über folgende Eigenschaften:
- Die einzelnen Detektorelemente haben einen Abstand von 75pm.
- Röntgenphotonen im Bereich von 1keV bis 30keV können detektiert werden.
- Die Energieauflösung eines einzelnen Detektorelementes ist besser als 400eV (FWHM) bezogen auf eine Energie von 8.04keV und für Zählraten von 0 bis 20kcps pro Detektorelement.
- Die Energieauflösung eines einzelnen Detektorelementes ist besser als 500eV (FWHM) bezogen auf eine Energie von 8.04keV und für Zählraten von 0 bis 100kcps pro Detektorelement. Bei etwas verminderter Energieauflösung können Röntgenphotonen von bis zu 1.5 Mcps verarbeitet werden. Die Detektoranordnung kann folglich je nach geforderter Energieauflösung, globale Photonenzählraten von 8Mcps bis zu über 200 Mcps verarbeiten.
- Der Charge-Sharing-Effekt wird nahezu vollständig eliminiert.
- Die Diskriminatorenschwellen lassen sich mit einer Auflösung von 10eV einstellen und erlauben eine präzise Selektion von Röntgenfluoreszenzspektren einzelner chemischer Elemente.
- Das Sensorsubstrat braucht nicht aufwendig gekühlt zu werden.

Damit kann eine derartige Detektionsanordnung für die erfindungsgemäße Vorrichtung zur Materialidentifikation erhebliche funktionelle Vorteile verschaffen. Es lassen sich zusammenfassend Detektionssysteme aufbauen, bei denen jedes einzelne Detektorelement gleichzeitig über einen sehr großen Dynamikbereich sowie über eine sehr hohe Energie- und eine sehr hohe Ortsauflösung verfügt. Da ein solches Detektionssystem zudem die Fähigkeit besitzt, den Charge-Sharing-Effekt zu eliminieren, können auch Materialproben, welche mehrere chemische Elemente enthalten, präzise und ohne gegenseitige spektrale Beeinflussung mit Hilfe der Röntgenfluoreszenzanalyse identifiziert werden.

### Bevorzugte Ausführungsformen der Erfindung

Ganz besonders bevorzugt ist eine Klasse von Ausführungsformen der erfindungsgemäßen Vorrichtung, bei denen die einzelnen flächig angeordneten Detektorelemente streifenförmig, in mindestens eine, vorzugsweise mehrere zueinander parallele oder kollineare Gruppen angeordnet und innerhalb einer Gruppe die einzelnen Streifen zueinander parallel ausgerichtet sind.

Vorteilhafte Weiterbildungen dieser Ausführungsformen sind dadurch gekennzeichnet, dass erste Gruppen von Detektorelementen orthogonal zur Fließbandrichtung und die einzelnen Streifen dieser Gruppe parallel zur Fließbandrichtung und/oder zweite Gruppen von Detektorelementen parallel zur Fließbandrichtung und die einzelnen Streifen dieser Gruppe orthogonal zur Fließbandrichtung angeordnet sind. Mit Hilfe solcher Detektorelemente-Anordnungen ist es möglich, die Ortsposition von Materialstücken zu bestimmen, die sich auf einem Fließband befinden. Diese Anordnungen ermöglichen eine hochaufgelöste Ortsbestimmung in Fließbandrichtung oder in Richtung orthogonal zur Fließbandrichtung. Die erzielbare Ortsauflösung wird durch den Abstand der einzelnen Detektorelemente bestimmt.

Besonders bevorzugte Varianten dieser Weiterbildungen zeichnen sich dadurch aus, dass das Röntgen-Detektor-Array aus einer Kombination von ersten und zweiten Gruppen von Detektorelementen aufgebaut ist. Diese Detektorelemente-Anordnungen ermöglichen gleichzeitig eine hochaufgelöste Ortsbestimmung sowohl in Fließbandrichtung als auch in Richtung orthogonal zur Fließbandrichtung.

Weitere vorteilhafte Ausführungsformen der Erfindung sind dadurch gekennzeichnet, dass zumindest einige der Detektorelemente aus einem Siliziumstreifensensor mit einer Substratdicke von mehr als 300µm, insbesondere 300µm bis 2mm, aufgebaut sind. Solche Siliziumstreifensensoren sind in der Lage, Röntgenstrahlung im Energiebereich 0,5keV bis zu gewöhnlicher Weise 30keV zu detektieren und direkt in elektrische Ladungsträger umzuwandeln. Der Aufbau und die Funktionsweise von Siliziumstreifensensoren per se sind unter anderen in Referenz [2] beschrieben.

Entsprechend der Erfindung, können die Komparatorschwellen jeder einzelnen Detektorelemente-Gruppe unabhängig voneinander eingestellt werden, und dadurch jeder Gruppe ein oder mehrere individuelle Energiefenster für die Detektion der auftreffenden Röntgenstrahlung zugewiesen werden.

Diese Vorrichtung ist somit in der Lage, Röntgenphotonen zu erkennen, deren Photonenenergie einem vorgegebenen Energiebereich entspricht. Zeitgleich kann die Vorrichtung die Ortsposition der detektierten Röntgenphotonen hochaufgelöst bestimmen, und zwar getrennt für jeden der vorgegebenen Energiebereiche.

Eine weitere Klasse von besonders bevorzugten Ausführungsformen der erfindungsgemäßen Vorrichtung zeichnet sich dadurch aus, dass die Diskriminatoreinrichtungen benachbarter Kanäle über eine Eliminationseinheit für Shared-Charges-Signale elektrisch miteinander verschaltet sind, dass eine jede dieser Eliminationseinheiten über eine parametrierbare VETO-Komparatorschwelle verfügt und dass die Eliminationseinheit bewirkt, dass in dem Röntgen-Detektor-Array eintreffende Röntgenphotonen jeweils dann nicht als Ereignis gezählt werden, wenn diese zur Folge haben, dass eine VETO-Schwelle von den elektrischen Ausgangssignalen zweier benachbarten Signalkanäle zeitgleich überschritten wird. Die Vorrichtung ist somit in der Lage zu erkennen, ob für ein einzelnes Röntgenphoton der Charge-Sharing-Effekt auftrat und kann in einem solchen Fall verhindern, dass dieses Photon von den Diskriminatoreinrichtungen als Ereignis registriert wird. Enthält eine Materialprobe mehrere chemische Elemente, dann erscheinen die einzelnen Energiespektren im resultierenden Gesamtenergiespektrum als Folge voneinander separiert und beeinflussen sich energetisch nicht mehr wechselseitig. Unter dem Begriff Shared-Charges-Signale, werden Gaußkurven-artige Ausgangssignale verstanden, welche für Röntgenphotonen erzeugt wurden, bei denen der Charge-Sharing-Effekt auftrat.

Alternativ sind bei einer weiteren Klasse von vorteilhaften Ausführungsformen der Erfindung die Diskriminatoreinrichtungen benachbarter Kanäle über eine Korrektureinheit für Shared-Charges-Signale elektrisch miteinander verschaltet, wobei diese Korrektureinheit simultan auftretende Gaußkurven-ähnliche Ausgangssignale in benachbarten Kanälen erkennt, in einem solchen Fall die Summe der Ausgangssignalamplituden bildet, das ermittelte Summensignal als ein einziges Ereignis demjenigen Kanal zuweist, welcher die höchste Signalamplitude zeigte und in dem anderen Kanal die Registrierung des Ausgangssignales unterdrückt. Eine derartig ausgestaltete Vorrichtung kann erkennen, ob für ein einzelnes Röntgenphoton der Charge-Sharing-Effekte auftrat und in einem solchen Fall die ursprüngliche Energie und Ortsposition des Röntgenphotons rekonstruieren. Enthält eine Materialprobe mehrere chemische Elemente, dann erscheinen die einzelnen Energiespektren im resultierenden Gesamtenergiespektrum als Folge voneinander separiert und beeinflussen sich energetisch nicht mehr wechselseitig.

Besonders bevorzugt sind auch Ausführungsformen der erfindungsgemäßen Vorrichtung, die sich dadurch auszeichnen, dass das Röntgen-Detektor-Array aus n>2 Gruppen mit jeweils gleichem Streifen-Abstand aufgebaut ist, die Streifen von einer Gruppe zur nächsten Gruppe um die Distanz des Streifen-Abstands dividiert durch n versetzt angeordnet sind. Für die weiter oben beschriebenen Varianten der Erfindung ist die minimal erzielbare Ortsauflösung auf den Abstand der einzelnen Detektorelemente begrenzt. Durch die vorgenannte Variante der erfindungsgemäßen Vorrichtung können einzelne Materialien mit einer Ortsauflösung, die kleiner ist als der Abstand zweier Detektorelemente, bestimmt werden.

Entsprechend der Erfindung werden einzelne Gruppen von Detektorelementen im TDI (="Time Delay Integration")-Modus synchron zur Momentan-Geschwindigkeit des Fließbandes betrieben.

Durch das Anwenden des TDI-Verfahrens wird die Zählstatistik für die detektierten Röntgenphotonen signifikant verbessert. Als Folge hiervon können die örtliche Position und auch die Materialzusammensetzung einer Materialprobe im Vergleich zum Betrieb ohne TDI-Verfahren deutlich präziser bestimmt werden. Für manche Messaufgaben ermöglicht die verbesserte Zählstatistik, dass das Fließband mit höheren Geschwindigkeiten betrieben werden kann.

Besonders bevorzugt sind Weiterbildungen dieser Ausführungsformen, bei denen für jede einzelne Gruppen von Detektorelementen das Sub-Channel-Verfahren angewandt wird, welches die Zählereignisse jedes einzelnen physikalischen Detektorelements in mehr als zwei virtuelle Signalkanäle aufteilt. Die erzielbare Ortsauflösung eines Röntgendetektors ist gewöhnlicher Weise durch den Abstand der einzelnen Detektorelemente limitiert. Durch die Anwendung des Sub-Channel-Verfahrens hingegen können Änderungen der Röntgenphotonen-Intensität sogar innerhalb eines Detektorelementes noch erkannt werden. Hierdurch können die Ortsposition von in Fließbandrichtung bewegten Materialproben und deren Materialstrukturen noch feiner bestimmt werden. Zudem generiert das Sub-Channel-Verfahren deutlich mehr Datenpunkte, als wenn dieses Verfahren nicht angewandt wird. Je mehr Datenpunkte vorliegen, desto präziser lässt sich die Ortsposition von Materialstücken mit Hilfe geeigneter mathematischer Algorithmen rekonstruieren.

Eine weitere vorteilhafte Ausführungsform der erfindungsgemäßen Vorrichtung zeichnet sich dadurch aus, dass zur Auslesung der digitalen Signale aus den Zählereinheiten ein FPGA (="Field-programmable gate array") oder ein ASIC (="Application-specific integrated circuit") oder ein frei programmierbarer Controller vorgesehen ist, jeweils vorzugsweise im Detektorkopf integriert. Die oben beschriebenen Detektoreigenschaften bedingen eine hohe Miniaturisierung und zudem, dass große Datenmengen an Zählereignissen synchron zur Momentangeschwindigkeit des Fließbandes ausgelesen sowie verarbeitet werden müssen. Dies ist gewöhnlicher Weise nur realisierbar, wenn das Auslesen und Verarbeiten der Zählereignisse mit Hilfe von FPGA-, ASIC- oder programmiergaren Controller-Bausteinen erfolgt, welche im Detektorkopf angeordnet sind.

Besonders bevorzugte Varianten der Erfindung bei einer weiteren Klasse von Ausführungsformen zeichnen sich dadurch aus, dass eine oder mehrere Gruppen von Detektorelementen nicht als ortsauflösender 1D-Detektor, sondern als ein flächig angeordneter OD-Detektor betrieben wird (werden), indem die Zählereignisse aller einzelnen Detektorelemente innerhalb dieser Gruppe(n) zusammenaddiert und als ein einziger Messwert ausgegeben werden. Ein einzelner OD-Detektor ist in der Lage, Röntgenfluoreszenzstrahlung zu detektieren, welche über einen verhältnismäßig großen Fließbandbereich verteilt auftritt. Mit Ausnahme der Ortsauflösung werden alle anderen in den vorherigen Ansprüchen genannten Detektoreigenschaften erzielt.

Eine weitere vorteilhafte Ausführungsform der erfindungsgemäßen Vorrichtung ist dadurch gekennzeichnet, dass jedes einzelne Detektorelement einer Gruppe von Detektorelementen deaktivierbar ist. Für das Röntgen-Detektor-Array können hierdurch vielfältige elektronische Blenden definiert werden. Mit diesen kann das Röntgen-Detektor-Array optimal an die Geometrie verschiedener Strahlengänge und individuelle örtliche Besonderheiten angepasst werden.

In den Rahmen der vorliegenden Erfindung fallen schließlich auch Ausführungsformen, bei welchen der Röntgendetektor so gestaltet ist, dass er kontinuierlich mindestens 2000 Einzelmessungen pro Sekunde durchführen kann. Eine hohe Ortsauflösung bei hohen Bandgeschwindigkeiten kann nämlich nur dann erzielt werden, wenn das Röntgen-Detektor-Array in der Lage ist, eine hohe Anzahl an Einzelmessungen pro Sekunde durchzuführen.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird im Folgenden anhand von Ausführungsbeispielen näher erläutert:

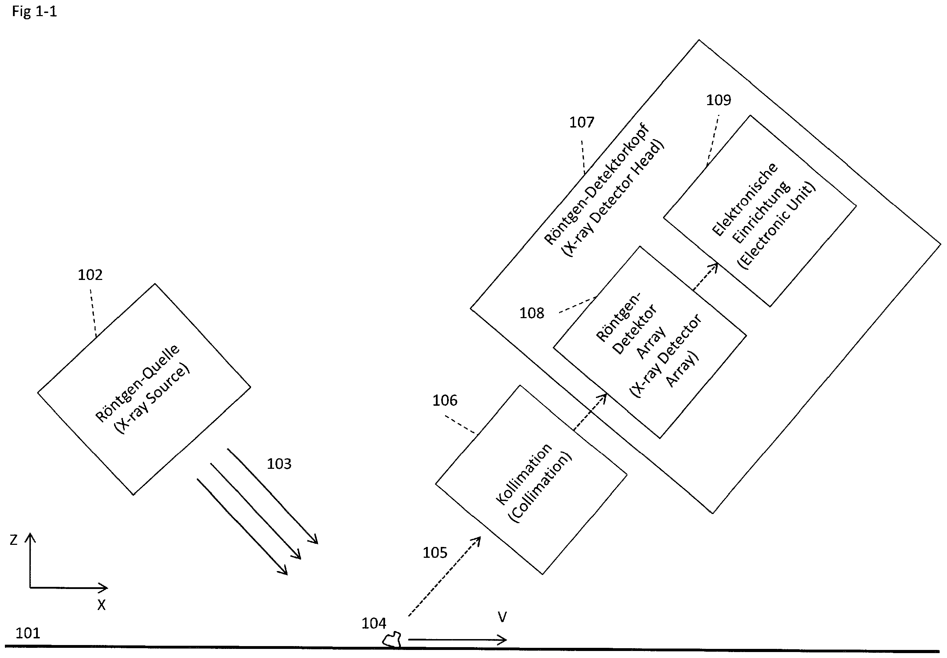

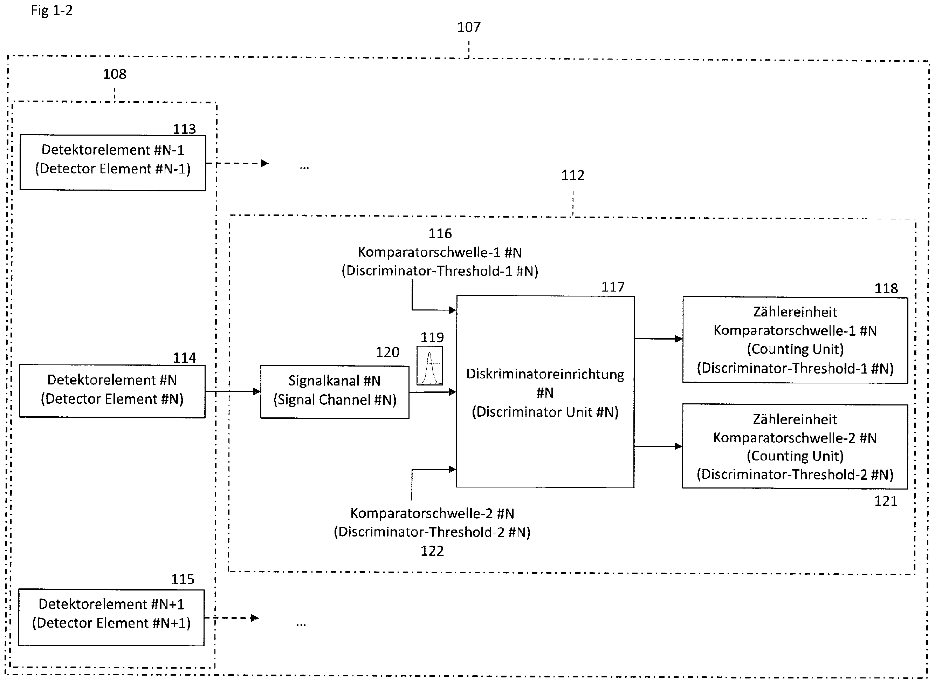

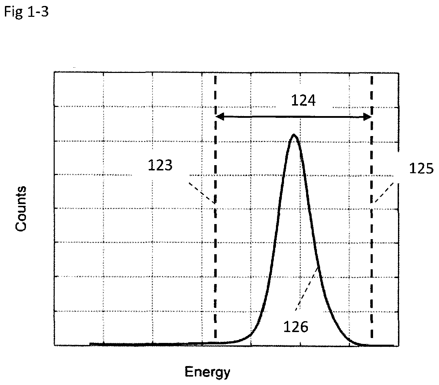

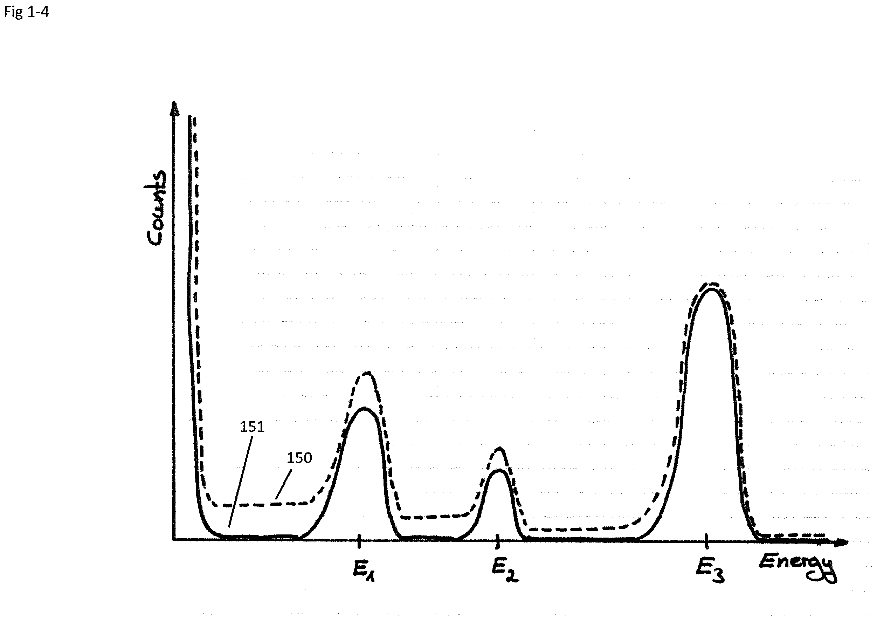

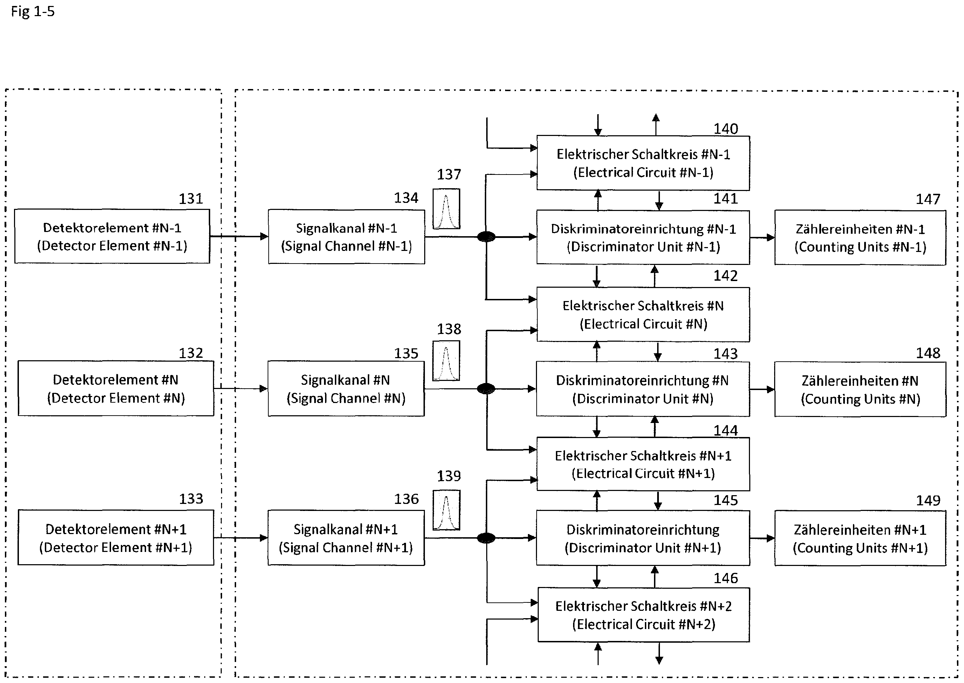

Die Figuren 1-1 bis 1-5 veranschaulichen schematisch eine erste Ausführungsform der erfindungsgemäßen Vorrichtung.
Figur 1-1 zeigt eine Röntgenquelle 102, welche Röntgenstrahlung 103 emittiert und mit dieser ein einzelnes Materialstück 104 bestrahlt, welches mittels eines Fließbandes 101 bewegt werden kann. Die von dem Materialpartikel angeregte Röntgenfluoreszenzstrahlung 105 wird üblicherweise durch eine Kollimationseinrichtung 106 geleitet und trifft auf einen Röntgendetektorkopf 107. Dieser enthält das Röntgen-Detektor-Array 108 und eine Elektronische Einrichtung 109 zum Auslesen und Verarbeiten der Signale aus dem Röntgendetektor-Array.
Figur 1-2 zeigt die einzelnen Funktionseinheiten innerhalb des Detektorkopfes 107. Jedes einzelne Detektorelement 114 des Röntgen-Detektor-Arrays 108 ist mit einer individuellen Elektronischen Sub-Einheit 112 verschaltet, welche aus einem Signalkanal 120, einer Diskriminatoreinrichtung 117 sowie mehreren Zählereinheiten besteht. Exemplarisch ist die Signalverarbeitung für Detektorelement #N dargestellt. Der Signalkanal wandelt die analogen Ausgangssignale des Detektorelementes in Gaußkurven-artige Signale 119 um, welche in der Diskriminatoreinrichtung in digitale Zählereignisse umgesetzt werden. Jede Diskriminatoreinrichtung verfügt über mindestens zwei einstellbare Komparatorschwellen und jeder Komparatorschwelle ist je eine Zählereinheit zugeordnet. In diesem Beispiel zählt die Zählereinheit 118 alle Gaußkurven-artige Signalereignisse, welche die Komparatorschwelle-1 116 überschreiten, Zählereinheit 121 summiert alle Signalereignisse auf, welche die Komparatorschwelle-2 122 überschreiten.
Figur 1-3 zeigt beispielhaft ein Histogramm 126 mit einer typischen Häufigkeitsverteilung der Amplituden der analogen Gaußkurven-artigen Zeitsignale 119. Aufgetragen ist die Anzahl (Counts) der einzelnen Zeitsignale, die über eine bestimmte Amplitude verfügen. Da die Amplitude der Gaußkurven-artigen Signale proportional ist zur Energie (Energy) der detektierten Röntgenphotonen, ist dieses Histogramm ebenso ein Abbild der Energieverteilung der einzelnen Röntgenphotonen, welche im Detektorelement-#N 114 detektiert worden sind. Gewöhnlicher Weise wird Komparatorschwelle-1 links vom Maximum der Gaußkurven-artigen Histogrammkurve gewählt, zum Beispiel bei Position 123. Komparatorschwelle-2 wird üblicherweise rechts davon eingestellt, also zum Beispiel bei Position125. In der Regel ist es das Ziel, alle Strahlungsereignisse zu detektieren, welche in einem hierdurch definierten Energiefenster 124 liegen. Bei dieser Darstellung wurde angenommen, dass kein Charge-Sharing im Detektorelement auftritt.
Figur 1-4 zeigt beispielhaft ein Histogramm für die Signalamplituden an der Stelle 119 und für den Fall, dass sich die in Detektorelement #N 114 registrierte Röntgenstrahlung aus Röntgenphotonen der Energien E1, E2 und E3 zusammensetzt. Würde kein Charge-Sharing auftreten, dann entspräche das Histogramm dem Verlauf 151. Da aber gewöhnlicher Weise Charge-Sharing nicht zu vermeiden ist und sich folglich erzeugte Ladungsträger zwischen benachbarten Detektorelementen aufteilen, zeigt das reale Histogramm eine Verteilung wie in Verlauf 150 angedeutet. Bedingt durch Charge-Sharing wird die Energieverteilung der Röntgenphotonen mit der Energie E3 unsymmetrisch und weist niederenergetische Anteile auf. Diese überlagen sich mit den Energieverteilungen der Röntgenphotonen der Energien E1 und E2 und verändern deren Energiespektren. Das Gleiche gilt für die Energieverteilungen für die Röntgenphotonen der Energien E2 und E1. Auch diese werden unsymmetrisch und weisen ihrerseits niederenergetische Anteile. Die niederenergetischen Anteile der Photonen der Energie E2 überlagern sich mit der Energieverteilung der Photonen der Energie E1.
Figur 1-5 stellt schematisch dar, wie die einzelnen Diskriminatoreinrichtungen einer ersten Ausführungsform der erfindungsgemäßen Vorrichtung miteinander gekoppelt sind. Die Diskriminatoreinrichtungen räumlich unmittelbar benachbarter Detektorelemente sind über elektrische Schaltkreise so miteinander verschaltet, dass ein simultanes Auftreten von Signalen auf mehr als einem Detektorelement erkannt, elektrisch gesondert behandelt und in den Zählereinheiten gesondert registriert wird. Beispielhaft ist der Elektrische Schaltkreis #N 142 in der Lage, zeitgleich auftretende Ereignisse in den Detektorelementen #N-1 und #N (131 und 132) zu erkennen und gesondert zu behandeln. Als Ergebnis dieser elektronischen Korrektur enthalten die von den einzelnen Diskriminatoreinrichtungen registrierten Energiespektren keine niederenergetischen Charge-Sharing-Anteile mehr. Nimmt man beispielhaft an, dass die Energieverteilung an der Stelle 138 einen Verlauf entsprechend 150 in Figur 1-4 besitzt, dann weist das von der Diskriminatoreinrichtung #N 143 nach elektronischer Korrektur registrierte Energiespektrum einen Verlauf gemäß 151 in Figur 1-4 auf. Die Histogramme für die einzelnen Photonenenergien erscheinen vollständig voneinander separiert und beeinflussen sich energetisch nicht mehr wechselseitig.

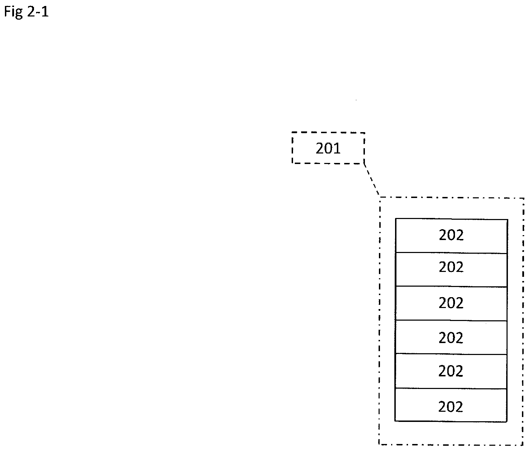

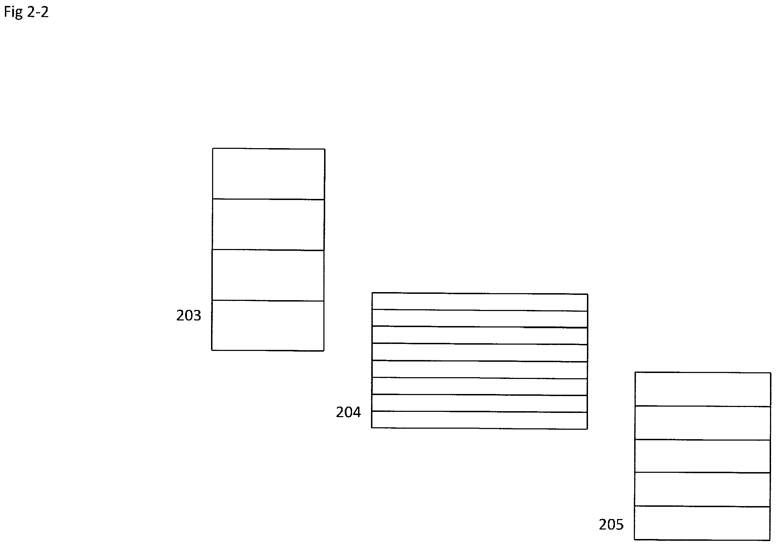

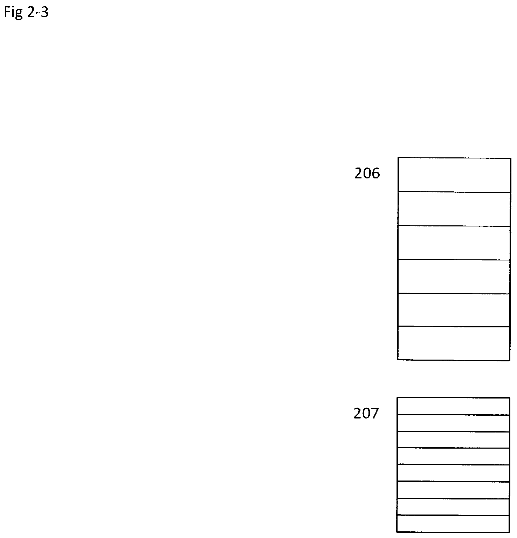

In Figuren 2-1 bis Figur 2-3 ist eine Ausführungsform der erfindungsgemäßen Vorrichtung dargestellt. Demnach sind die einzelnen flächig angeordneten Detektorelemente 202 streifenförmig und können in einer einzigen Gruppe 201 oder in mehreren zueinander parallelen Gruppen 203, 204 und 205 angeordnet sein. Die einzelnen Detektorelementegruppen können auch kollinear angeordnet sein, wie bespielhaft durch 206 und 207 dargestellt. Innerhalb einer Gruppe sind die einzelnen Streifen vorzugsweise zueinander parallel ausgerichtet.

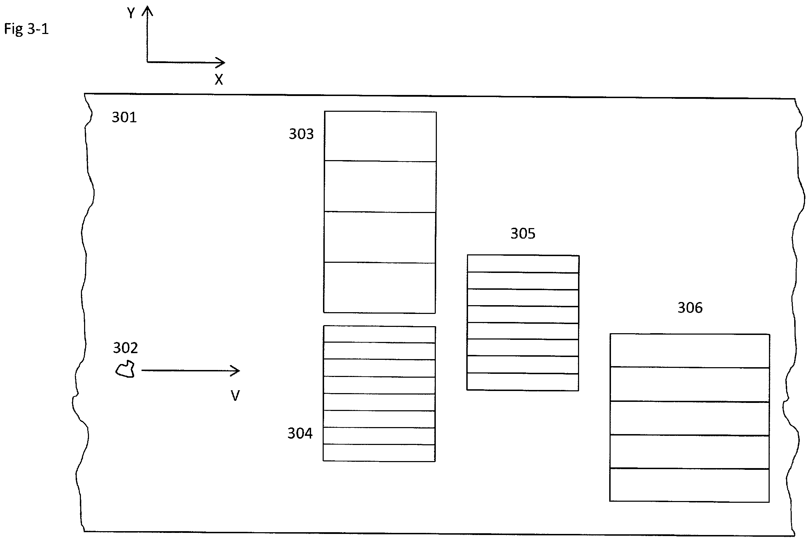

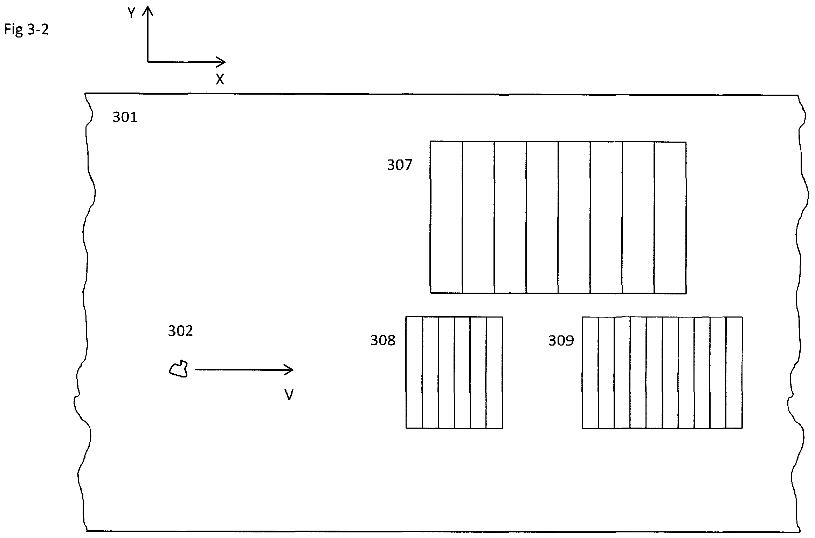

Figuren 3-1 bis Figur 3-2 zeigen eine Ausführungsform der erfindungsgemäßen Vorrichtung. Beispielhaft befindet sich ein Materialstück 302 auf einem Fließband 301 und bewegt sich mit der Geschwindigkeit v auf die Detektorelemente zu.

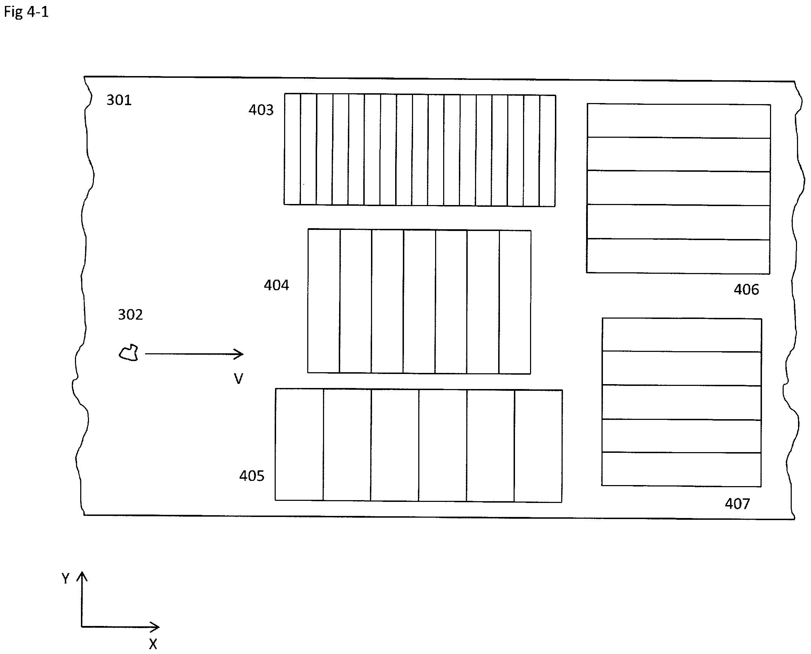

Erste Gruppen von Detektorelementen 303, 304, 305 und 306 sind orthogonal zur Fließbandrichtung ausgerichtet. Die einzelnen Streifen dieser Gruppen zeigen parallel zur Fließbandrichtung. Zweite Gruppen von Detektorelementen 307, 308 und 309 sind parallel zur Fließbandrichtung angeordnet. Die einzelnen Streifen dieser zweiten Gruppe sind orthogonal zur Fließbandrichtung. Figur 4-1 zeigt eine Ausführungsform der erfindungsgemäßen Vorrichtung, die dadurch gekennzeichnet ist, dass das Röntgen-Detektor-Array aus einer Kombination von ersten 406-407 und zweiten 403-405 Gruppen von Detektorelementen aufgebaut ist.

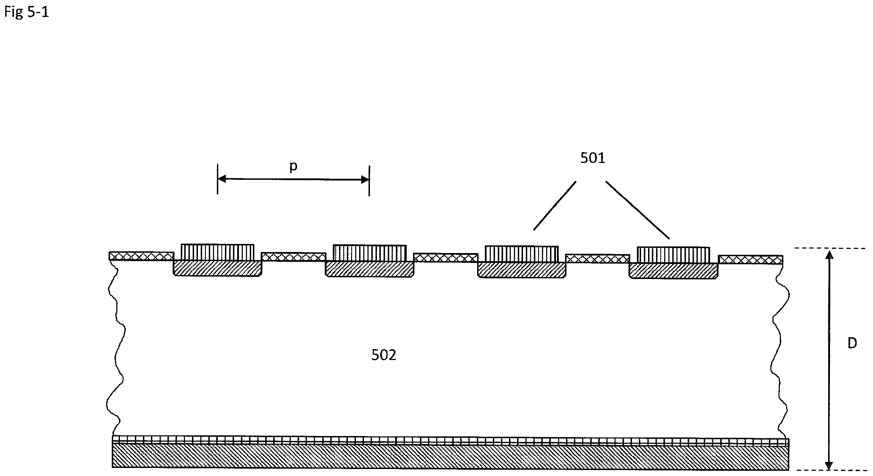

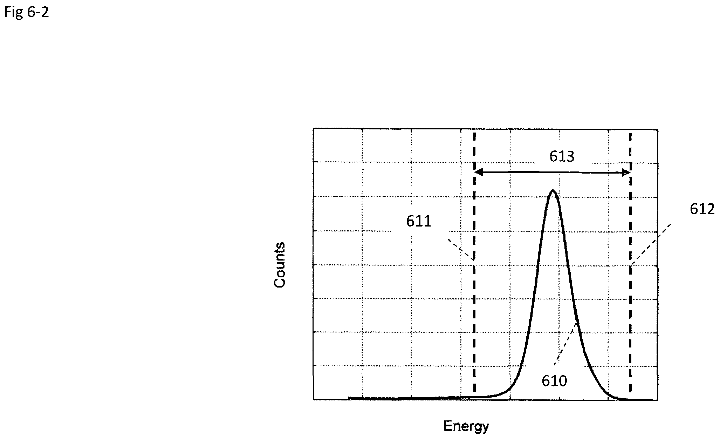

Figur 5-1 zeigt eine Ausführungsform der erfindungsgemäßen Vorrichtung, bei welcher die Detektorelemente 501 als Siliziumstreifensensor ausgeführt sind, dessen Halbleitersubstrat 502 eine Dicke D aufweist. Der Abstand der einzelnen Detektorelemente hat die Distanz p. Figur 5-1 wurde abgeleitet von der Aufbauzeichnung Fig. 6.2 in Referenz [2].

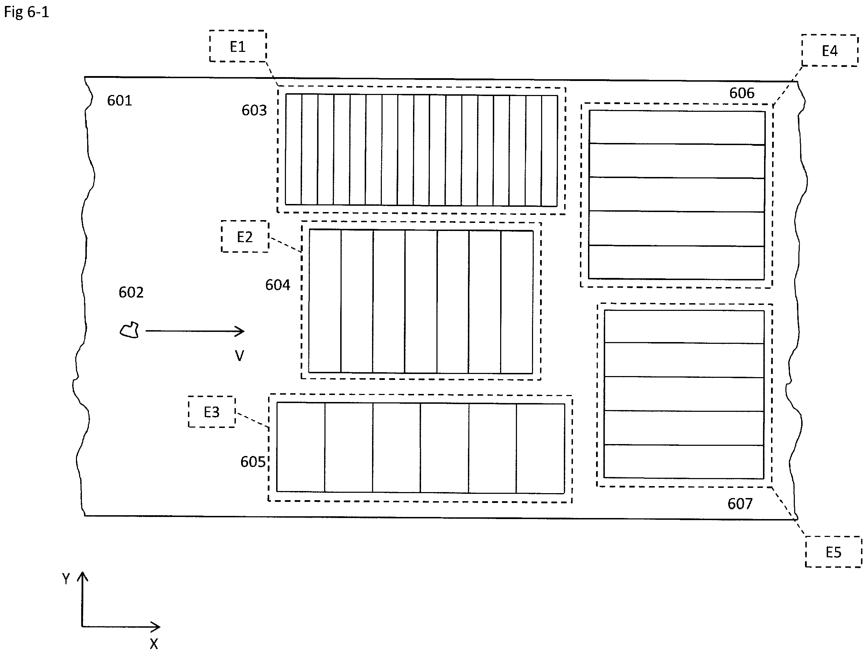

Figur 6-1 und Figur 6-2 zeigen eine Ausführungsform der erfindungsgemäßen Vorrichtung, die dadurch gekennzeichnet ist, dass die Komparatorschwellen jeder einzelnen Detektorelemente-Gruppe 603 bis 607 unabhängig voneinander gewählt werden können, und dass dadurch jeder Gruppe individuelle Energiefenster für die Detektion der auftreffenden Röntgenstrahlung zugewiesen werden können. In diesem Beispiel wird angenommen, dass jede der genannten Gruppen über zwei global einstellbare Komparatorschwellen 611 und 612 und somit über ein Energiefenster 613 verfügt. Somit kann für jede der genannten Gruppen ein eigenes Energiefenster E1, E2, E4 oder E5 definiert werden.

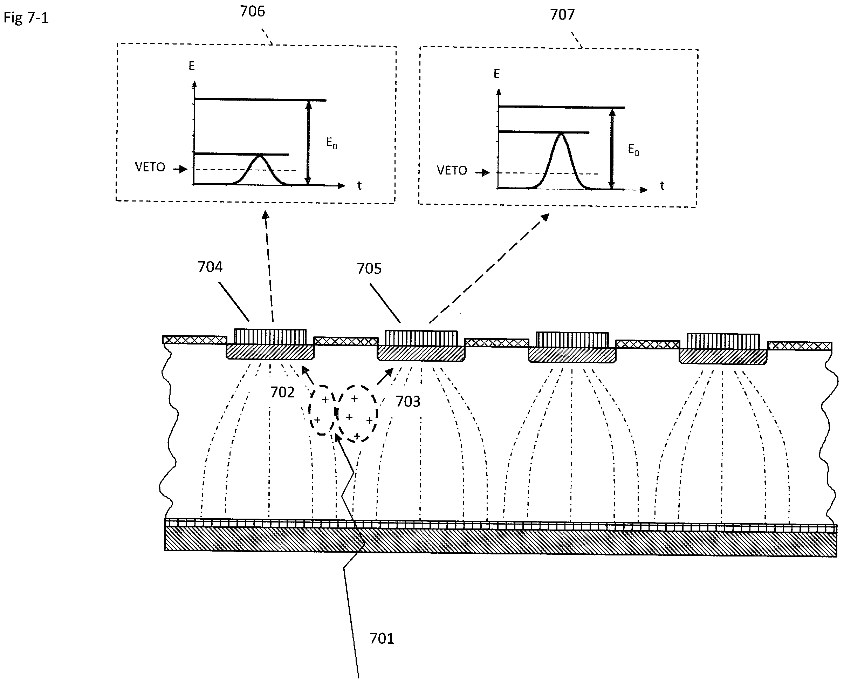

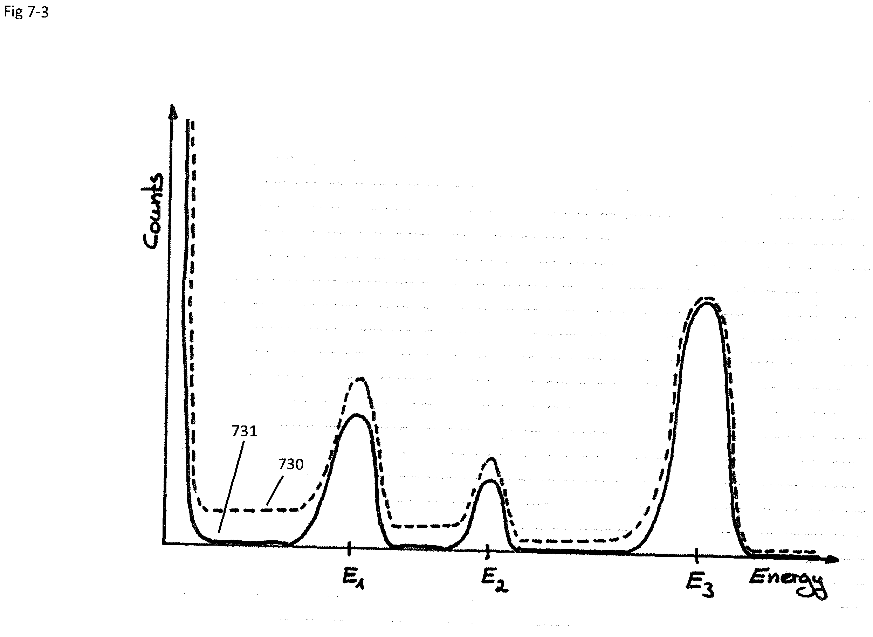

Figuren 7-1 bis Figur 7-3 veranschaulichen die Funktionsweise einer Ausführungsform der erfindungsgemäßen Vorrichtung, die dadurch gekennzeichnet ist, dass die Diskriminatoreinrichtungen benachbarter Kanäle über eine Eliminationseinheit für Shared-Charges-Signale miteinander elektrisch verschaltet sind.

Figur 7-1 zeigt beispielhaft ein Röntgenphoton 701 mit der Energie E₀, welches im Sensorsubstrat elektrische Ladungsträger erzeugt. Auf Grund von Charge-Sharing verteilen sich die erzeugten Ladungsträger auf zwei benachbarte Detektorelemente. Eine erste Teilmenge 702 dieser Ladungsträger wird von Detektorelement 704, eine zweite Teilmenge 703 von Detektorelement 705 empfangen. Am Ausgang des Signalkanals von Detektorelement 704 wird das Zeitsignal 706, am Ausgang des Signalkanals von Detektorelement 705 wird das Zeitsignal 707 erzeugt. Die Summe der Signalamplituden entspricht der ursprünglichen Photonenenergie E₀. Diese Ausführungsform der Vorrichtung verhindert die Registrierung eines einzelnen Röntgenphotons, wenn dieses zur Folge hat, dass die voreingestellte VETO-Schwelle von den Ausgangssignalen zweier benachbarten Detektorelemente zeitgleich überschritten wird. Ein solches Photon wird demnach in keiner der einzelnen Zähleinheiten als Ereignis gezählt.

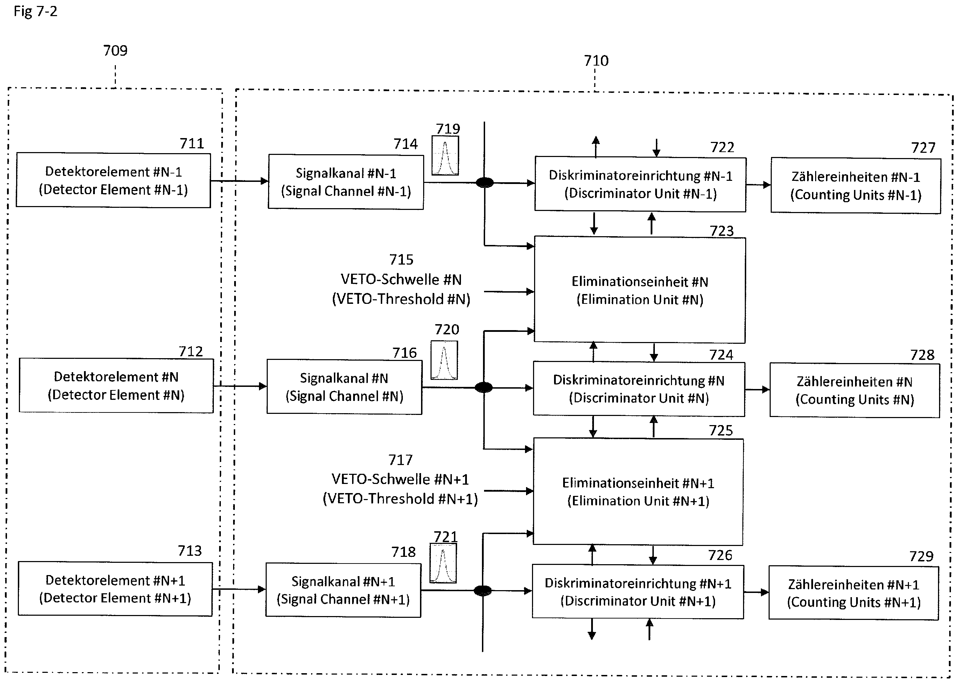

Figur 7-2 zeigt den besonderen Aufbau der elektronischen Ausleseeinrichtung 710 für diese Ausführung der erfindungsgemäßen Vorrichtung. Den Diskriminatoreinrichtungen zweier benachbarten Kanäle ist jeweils eine Eliminationseinheit zwischengeschaltet. In diesem Beispiel ist Diskriminatoreinrichtung #N mit den Eliminationseinheiten #N und #N+1 verknüpft. Jede Eliminationseinheit erhält zudem als Eingangssignale die beiden analogen Ausgangssignale der benachbarten Signalkanäle sowie eine frei parametrierbare VETO-Komparatorschwelle. Im Beispiel sind die Ausgangssignale 719 und 720 sowie die VETO-Schwelle #N auf die Eliminationseinheit #N geführt. Entsprechendes gilt für die Eliminationseinheit #N+1. Das Ausgangssignal 720 wird dann nicht als Ereignis registriert und gezählt, wenn zeitgleich bei Ausgangssignal 719 ein Ereignis auftritt, welches ebenso wie das Ausgangssignal 720 die VETO-Schwelle #N überschreitet. Entsprechendes gilt, wenn die Ausgangssignale 720 und 721 zeitgleich die VETO-Schwelle #N+1 überschreiten.

Figur 7-3 zeigt den Histogrammverlauf für das Ausgangssignal 720 von Detektorelement #N. Beispielhaft wird eine typische Energieverteilung 730 für den Fall gezeigt, dass Röntgenphotonen der Energien E1, E2 und E3 zeitgleich auf das Detektorelement #N (712) einwirken und der Charge-Sharing-Effekt auftritt. Die Eliminationseinheiten #N und #N+1 bewirken, dass das von der Diskriminatoreinrichtung #N registrierte Energiespektrum einen Verlauf gemäß 131 in Figur 7-3 aufweist. Die Histogramme für die einzelnen Photonenenergien erscheinen vollständig voneinander separiert und beeinflussen sich energetisch nicht mehr wechselseitig.

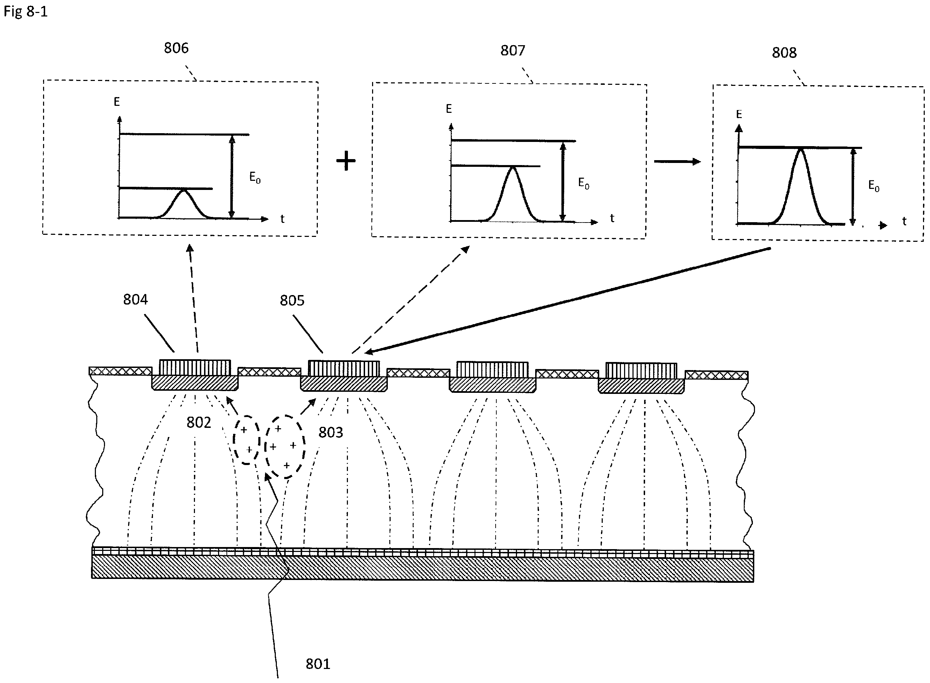

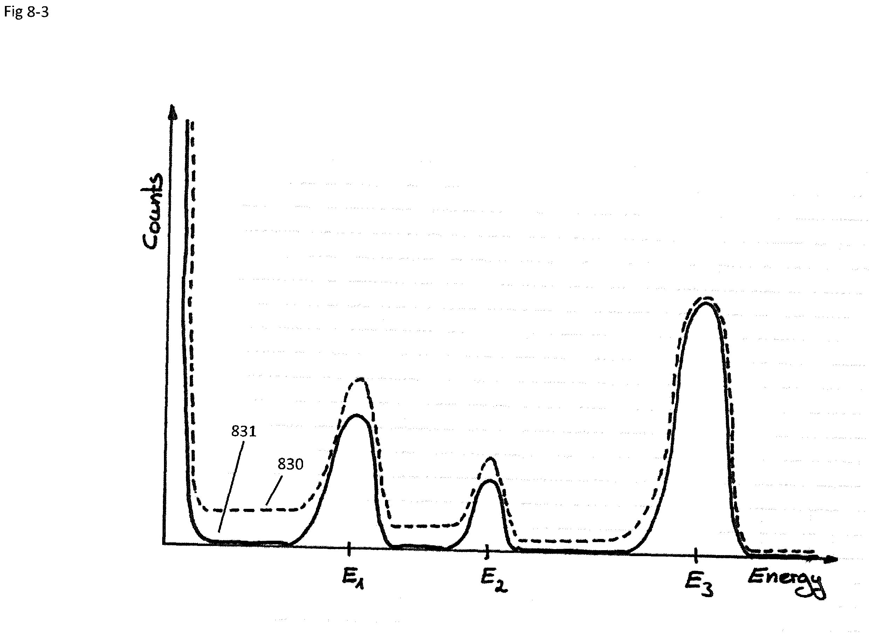

Figuren 8-1 bis Figur 8-3 veranschaulichen die Funktionsweise einer Ausführungsform der erfindungsgemäßen Vorrichtung, die dadurch gekennzeichnet ist, dass die Diskriminatoreinrichtungen benachbarter Kanäle über eine Korrektureinheit für Shared-Charges-Signale miteinander elektrisch verschaltet sind.

Figur 8-1 zeigt beispielhaft ein Röntgenphoton 801 mit der Energie E₀, welches auf Grund von Charge Sharing am Ausgang des Signalkanals von Detektorelement 804 das Zeitsignal 806 und am Ausgang des Signalkanals von Detektorelement 805 das Zeitsignal 807 erzeugt. Diese Ausführungsform erkennt, wenn sich Ladungsträger eines einzelnen Röntgenphotons auf zwei benachbarte Detektorelemente verteilen und rekonstruiert die ursprüngliche Photonenenergie durch Addition der Zeitsignale 806 und 807. Das rekonstruierte Ereignis wird demjenigen Detektorelement zugeordnet, dessen Zeitsignal die höchste Amplitude aufwies. Im Beispiel wird das rekonstruierte Summensignal 808 dem Detektorelement 805 zugewiesen.

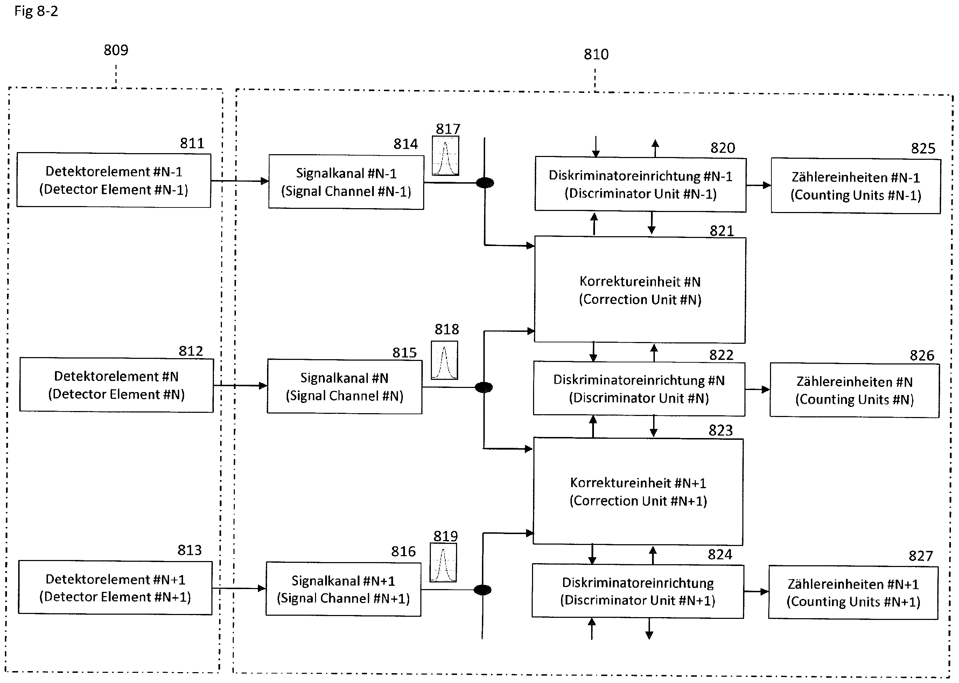

Figur 8-2 zeigt den besonderen Aufbau der elektronischen Ausleseeinrichtung für diese Ausführung der erfindungsgemäßen Vorrichtung. Den Diskriminatoreinrichtungen zweier benachbarte Kanäle sind jeweils eine Korrektureinheit zwischengeschaltet. In diesem Beispiel ist Diskriminatoreinrichtung #N mit den Korrektureinheiten #N und #N+1 verknüpft. Jede Korrektureinheit erhält zudem als Eingangssignale die beiden analogen Ausgangssignale der benachbarten Signalkanäle. Im Beispiel sind die Signale 817 und 818 auf die Korrektureinheit #N geführt. Entsprechendes gilt für die Korrektureinheit #N+1. Ein Signal 818 wird von Diskriminatoreinrichtung #N dann nicht als Ereignis registriert und gezählt, wenn bei 817 zeitgleich ein Ereignis auftritt, dessen Amplitude höher als diejenige des Signals 818 ist. In diesem Fall bildet die Korrektureinheit #N die Summe der Amplituden der Signale 817 und 818 und weist dieses Summenereignis der Diskriminatoreinrichtung #N-1 zu. Es kann somit von den Zählereinheiten #N-1 registriert werden. Entsprechend wird das Summenereignis der Diskriminatoreinrichtung #N zugewiesen, wenn die Signalamplitude 818 größer ist als diejenige von Signal 817.

Figur 8-3 zeigt den Histogrammverlauf für das Ausgangssignal 818 von Detektorelement #N. Beispielhaft wird eine typische Energieverteilung 830 für den Fall gezeigt, dass Röntgenphotonen der Energien E1, E2 und E3 zeitgleich auf das Detektorelement #N (812) einwirken und der Charge-Sharing-Effekt auftritt. Die Korrektureinheiten #N und #N+1 bewirken, dass das von der Diskriminatoreinrichtung #N registrierte Energiespektrum einen Verlauf gemäß 831 in Figur 8-3 aufweist. Die Histogramme für die einzelnen Photonenenergien erscheinen vollständig voneinander separiert und beeinflussen sich energetisch nicht mehr wechselseitig.

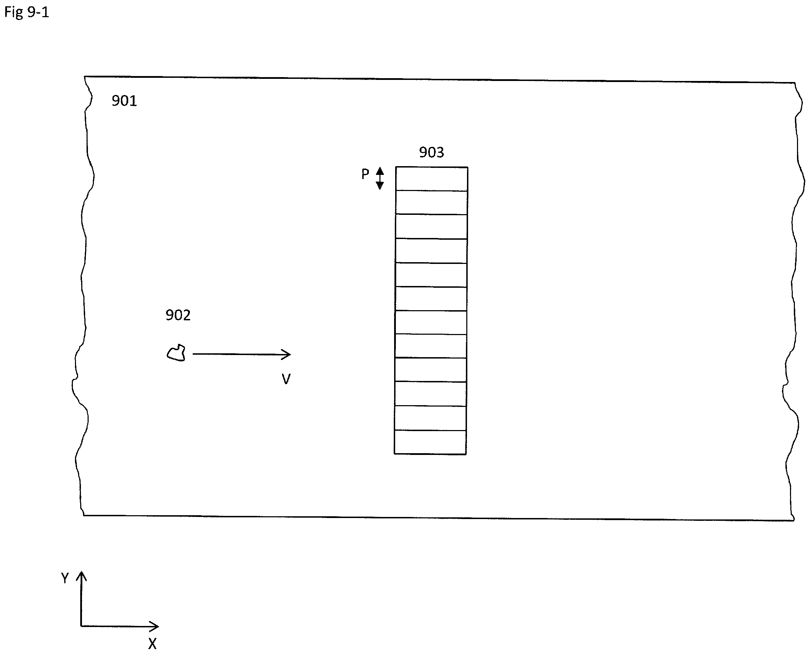

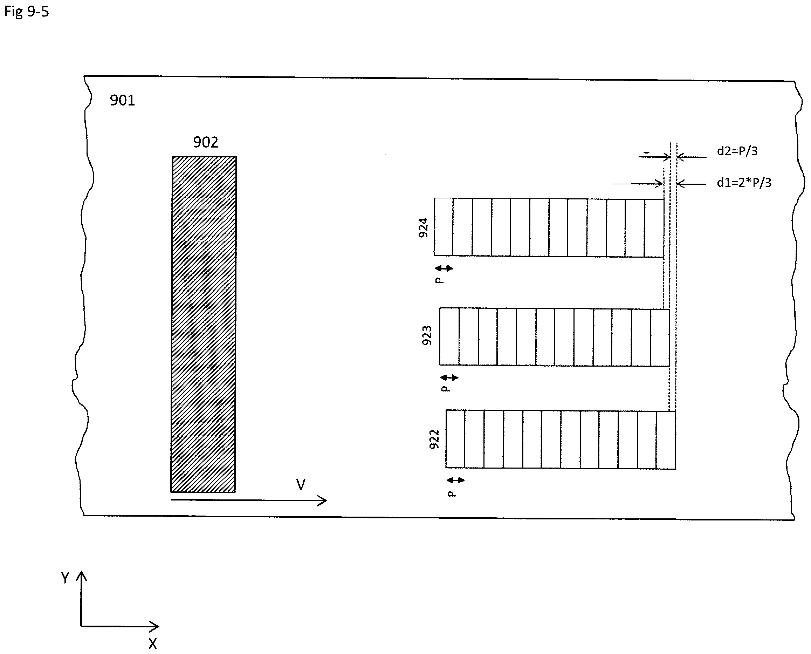

Figuren 9-1 bis Figur 9-5 veranschaulichen die Funktionsweise einer Ausführungsform der erfindungsgemäßen Vorrichtung, die dadurch gekennzeichnet ist, dass das Röntgen-Detektor-Array aus n>2 Gruppen mit jeweils gleichem Streifen-Abstand aufgebaut ist und die Streifen von einer Gruppe zur nächsten Gruppe um die Distanz des Streifen-Abstands dividiert durch n versetzt angeordnet sind.

Figur 9-1 zeigt beispielhaft ein Materialstück 902, welches sich mit der Geschwindigkeit v auf eine Detektorelementegruppe 903 zubewegt. Der Abstand der Detektorelemente beträgt die Distanz p.

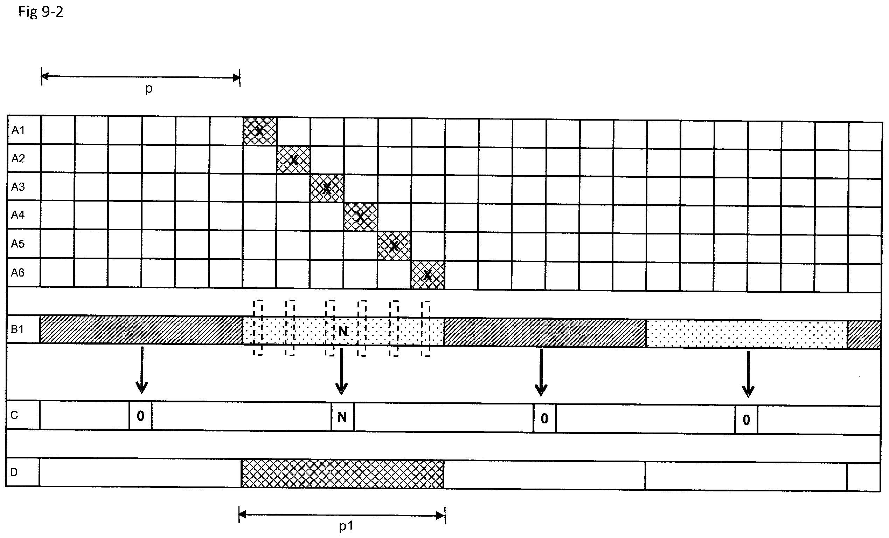

Figur 9-2 zeigt in Zeile B1 die Detektorelemente der Gruppe 903, welche den Abstand p besitzen und welche die von dem Materialstück 902 emittierte Röntgenfluoreszenzstrahlung detektieren. Das Materialstück erzeugt in diesem Beispiel N Röntgenphotonen pro Zeiteinheit. Jedem Detektorelement ist, wie in Zeile C dargestellt, eine Speicherzelle zugeordnet, in welches die Anzahl der registrierten Röntgenphotonen eingetragen wird. In den Zeilen A1 bis A6 kennzeichnet der Buchstabe x verschiedene mögliche Positionen des Materialstückes 902. Für jede der Positionen A1 bis A6 detektiert das Detektorelement wie dargestellt N Zählereignisse. Die erzielbare Ortsauflösung entspricht in diesem Beispiel folglich der Distanz p1, welche gleich der Distanz p ist.

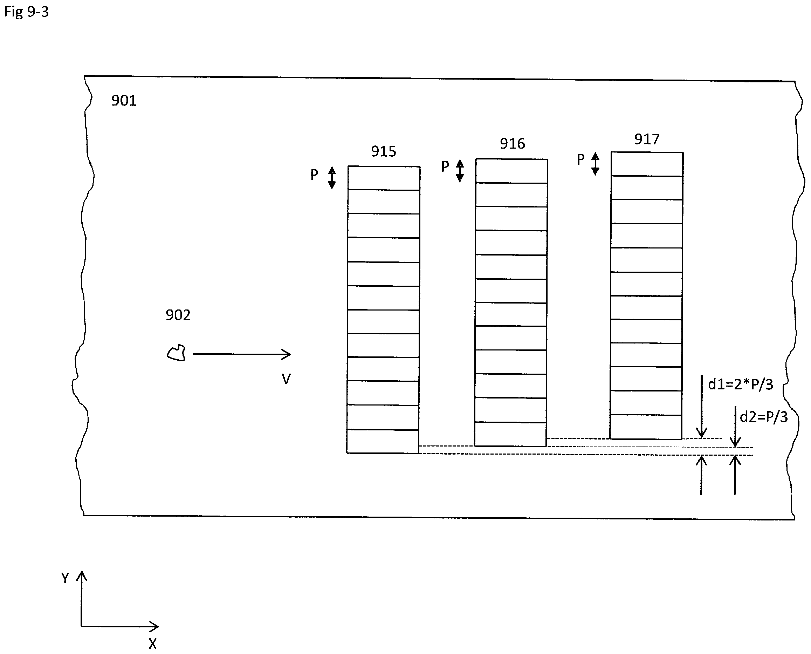

Figur 9-3 zeigt beispielhaft ein Materialstück 902, welches sich mit der Geschwindigkeit v auf drei zueinander parallele Detektorelementegruppen 915, 916 und 917 zubewegt. Der Abstand der Detektorelemente innerhalb einer jeden Gruppe beträgt die Distanz p. Die Detektorelemente der Gruppen 915, 916 und 917 sind um jeweils 1/3 p versetzt angeordnet.

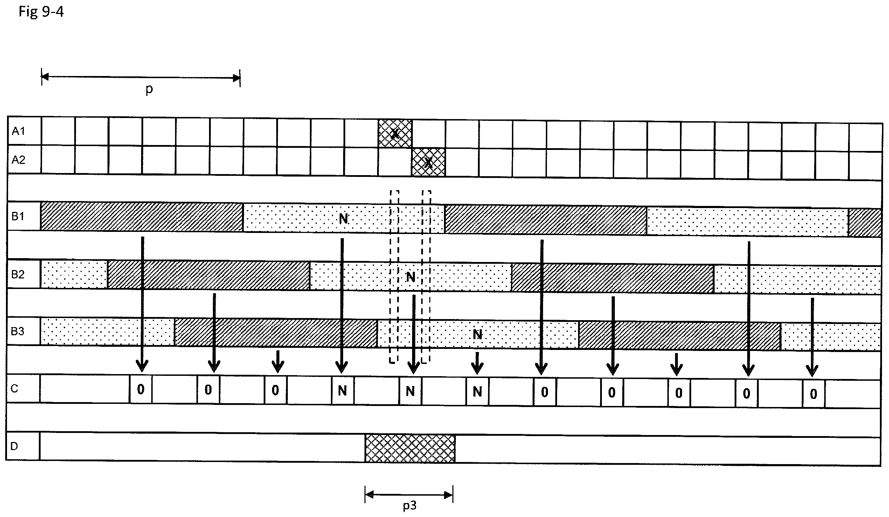

Figur 9-4 zeigt in Zeile B1 die Detektorelemente der Gruppe 915, in Zeile B2 diejenigen der Gruppe 916 und in Zeile B3 diejenigen der Gruppe 917. Jedem der Detektorelemente wird, wie in Zeile C dargestellt, eine Speicherzelle zugeordnet, in welche die Anzahl der registrierten Röntgenphotonen eingetragen wird. Befindet sich das Materialstück 902 an den Positionen A1 oder A2, dann werden in den drei Detektorelementen wie dargestellt jeweils N Zählereignisse registriert und den entsprechenden Speicherzellen zugeordnet. Die nach Anwendung geeigneter Interpolationsverfahren erzielbare Ortsauflösung entspricht in diesem Beispiel der Distanz p3, welche signifikant kleiner als die Distanz p ist.

Figur 9-5 zeigt, dass das sich dieses Funktionsprinzip auch für die hochaufgelöste Ortsbestimmung in Fließbandrichtung anwenden lässt. Das Materialstück 902 bewegt sich auf die Gruppen 922, 923 und 924 zu, welche um den Abstand p/3 versetzt angeordnet sind.

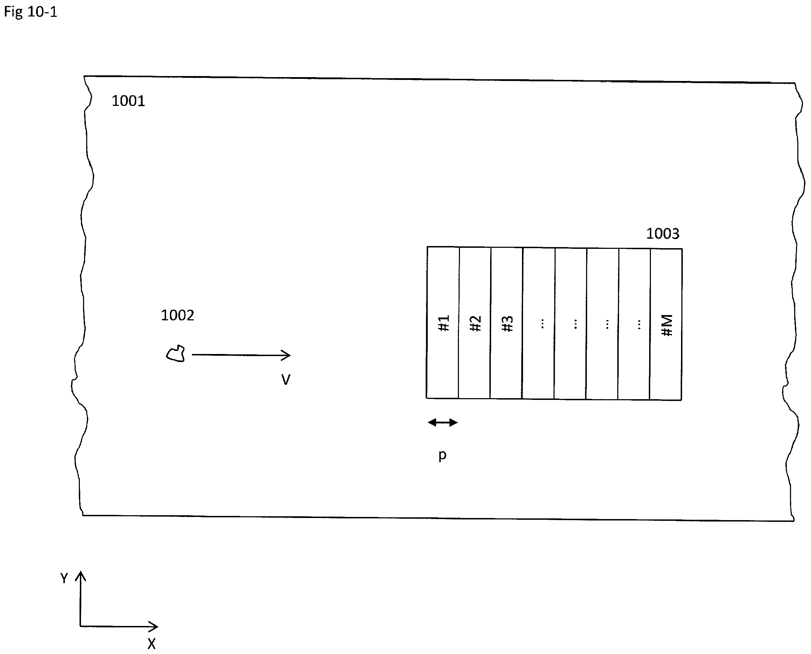

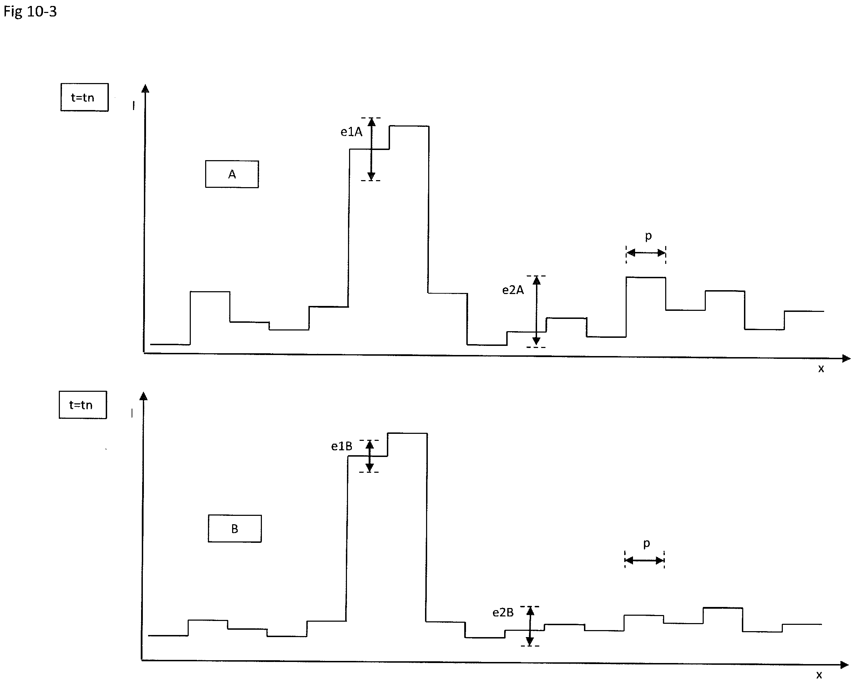

Figuren 10-1 bis Figur 10-3 veranschaulichen die Funktionsweise einer Ausführungsform der Vorrichtung, die dadurch gekennzeichnet, dass einzelne Gruppen von Detektorelementen im TDI (="Time Delay Integration")-Modus synchron zur Momentan-Geschwindigkeit des Fließbandes betrieben werden.

Figur 10-1 zeigt beispielhaft ein Materialstück 1002, welches sich mit der Geschwindigkeit v auf eine Detektorelementegruppe 1003 zubewegt. Die Gruppe besteht aus M Detektorelementen. Der Abstand der einzelnen Detektorelemente beträgt die Distanz p.

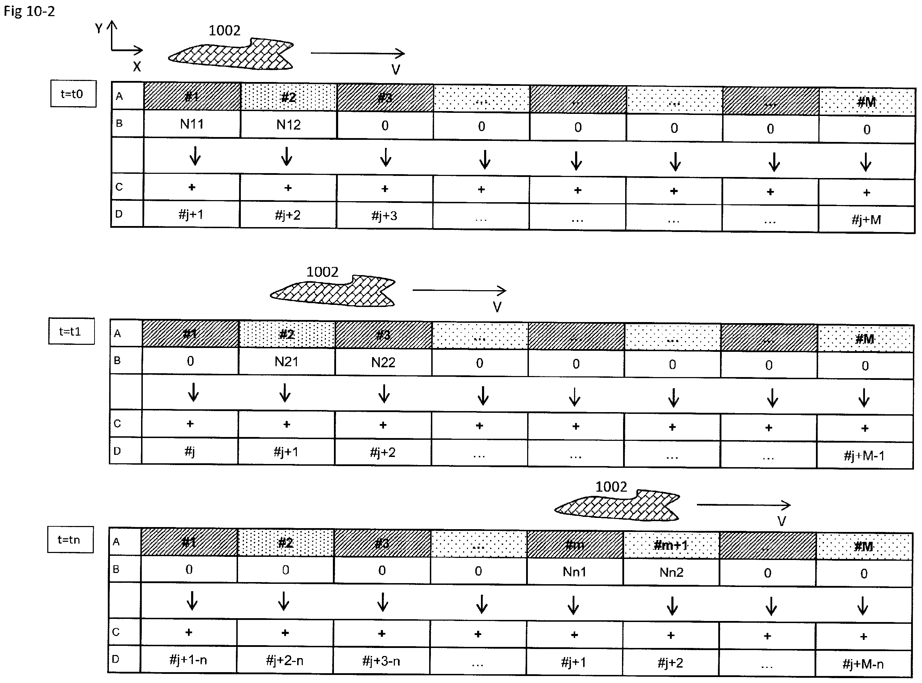

Figur 10-2 veranschaulicht beispielhaft die Funktionsweise des TDI-Verfahrens. Dargestellt ist die örtliche Position des Materialstückes 1002 bezogen auf die einzelnen Detektorelemente #1 bis #M (Zeile A) und zu den Zeitpunkten t0, t1 und tn. Zum Zeitpunkt t0 registriert das Detektorelement #1 die Anzahl von N11 Röntgenphotonen, das Detektorelement #2 die Anzahl von N12 Photonen. N11 wird zum bestehenden Inhalt von Speicherzelle #j+1 (Zeile D) addiert, N12 zum Inhalt von Speicherzelle #j+2. Zu den nachfolgenden Zeitpunkten wird genauso verfahren. Es werden wiederum die von dem Materialstück 1002 emittierten Röntgenphotonen zu den Speicherzellen #j+1 und #j+2 aufaddiert. Zum Zeitpunkt t1 werden somit die Zählraten N21 und N22 zu den Speicherzellen #j+1 und #j+2 aufaddiert, zum Zeitpunkt tn werden die Zählraten Nn1 und Nn2 zu den Speicherzellen #j+1 und #j+2 hinzugezählt.

Figur 10-3 zeigt beispielhaft ein Intensitätsprofil aufgetragen über die Fließbandrichtung, welches von der Detektorelementgruppe 1003 gemessen wurde. Im Fall A erfolgte die Messung ohne und im Fall B mit Anwendung des TDI-Verfahrens. Im Fall B sind die Intensitätsschwankungen e1B für das detektierte Materialstück 1002 und die Intensitätsschwankungen für die gemessene Untergrundstrahlung e2B auf Grund des TDI-Verfahrens deutlich geringer als diejenigen im Fall A. Die örtliche Position und die Materialzusammensetzung des Materialstückes 1002 können durch Anwenden des TDI-Verfahrens folglich deutlich besser bestimmt werden.

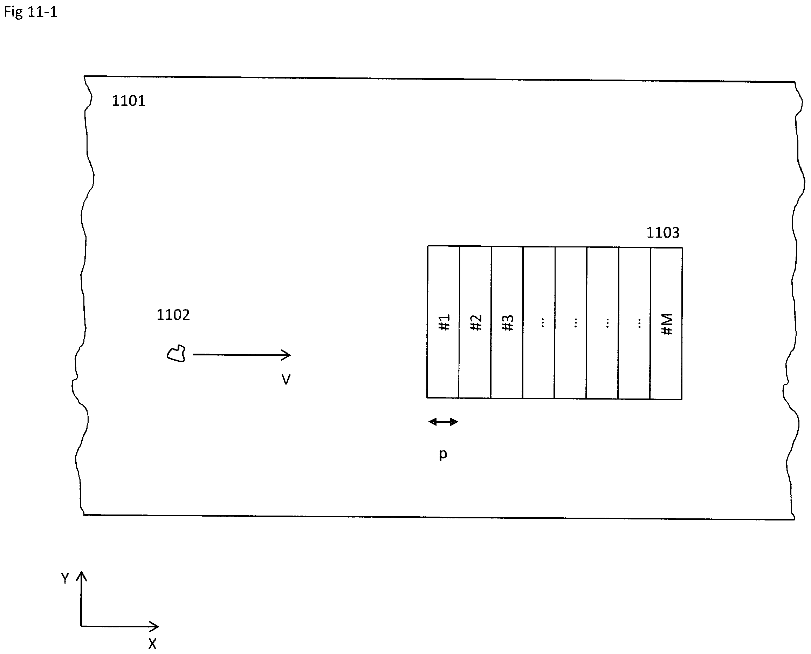

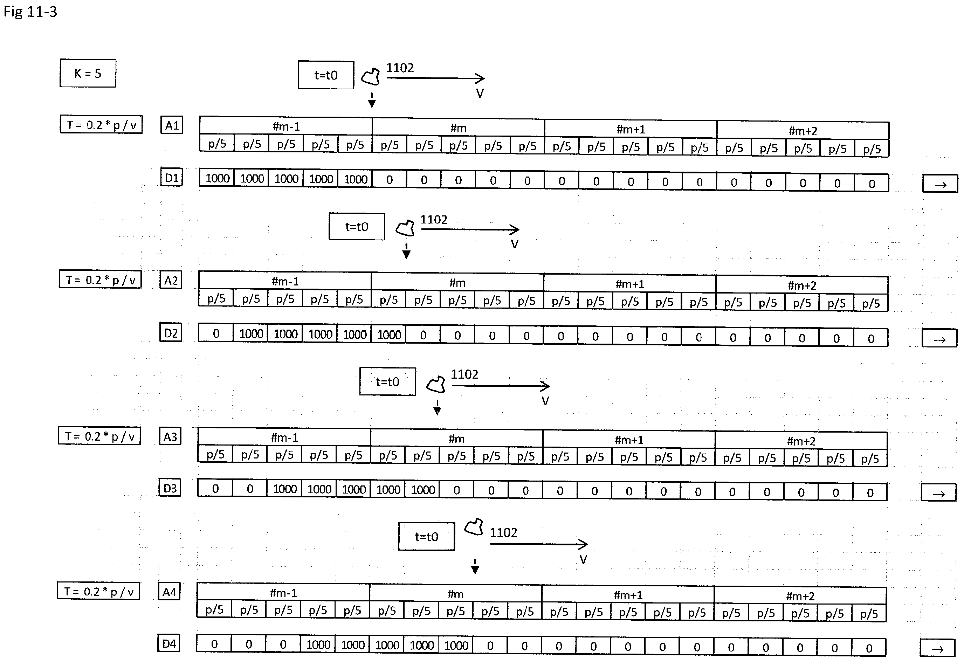

Figuren 11-1 bis Figur 11-3 veranschaulichen die Funktionsweise einer Weiterbildung, die dadurch gekennzeichnet ist, dass für einzelne Gruppen von Detektorelementen das Sub-Channel-Verfahren angewandt wird, welches die Zählereignisse jedes einzelnen physikalischen Detektorelements in mindestens zwei virtuelle Signalkanäle aufteilt. Das Verfahren erfolgt synchron zur Momentan-Geschwindigkeit des Fließbandes und kann mit oder ohne TDI-Verfahren angewandt werden.

Figur 11-1 zeigt beispielhaft ein Materialstück 1102, welches sich mit der Geschwindigkeit v auf eine Detektorelementegruppe 1103 zubewegt. Die Gruppe besteht aus M Detektorelementen. Der Abstand der einzelnen Detektorelemente beträgt die Distanz p.

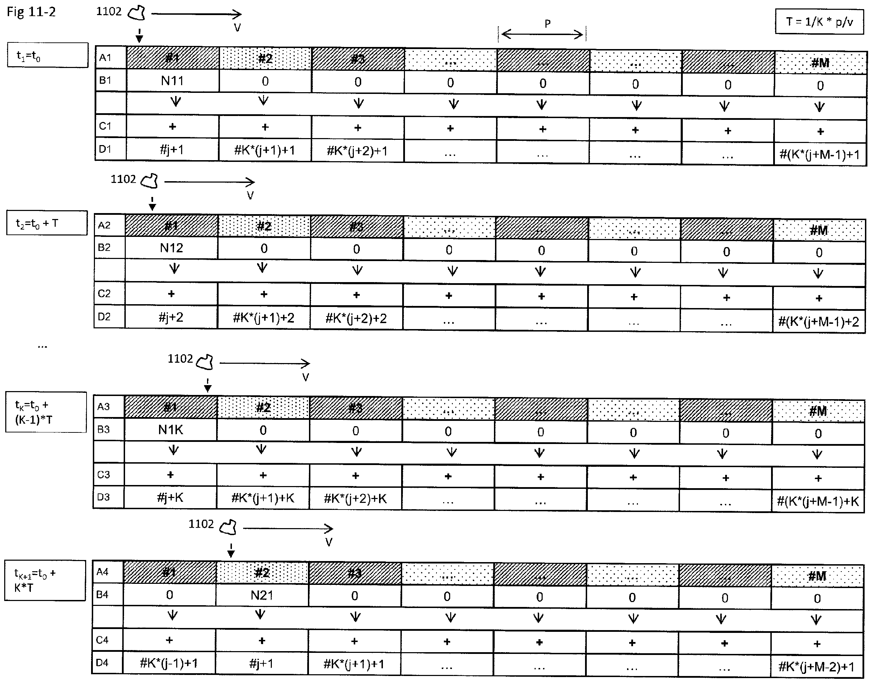

Figur 11-2 veranschaulicht beispielhaft die Funktionsweise des Sub-Channel-Verfahrens bei gleichzeitiger Anwendung des TDI-Verfahrens. Dargestellt ist die örtliche Position des Materialstückes 1102 bezogen auf die einzelnen Detektorelemente #1 bis #M (Zeilen A1 bis A4) und zu den Zeitpunkten t₁, t₂, t_{K} und t_{K+1}. In diesem Beispiel wird jedes reale Detektorelement in K virtuelle

Detektorelemente mit einem virtuellen Abstand von p/K aufgeteilt. Es werden jeweils Röntgenphotonen für eine Zeitdauer T gemessen und wie folgt den einzelnen Speicherzellen zugewiesen. Zum Zeitpunkt t₀ registriert das Detektorelement #1 die Anzahl von N11 Röntgenphotonen, alle anderen Detektorelemente die Zählrate 0. N11 wird zum bestehenden Inhalt von Speicherzelle #j+1 (Zeile D1) addiert. Zum Zeitpunkt t₂ wird die Zählrate N12 detektiert und zum Inhalt von Speicherzelle #j+2 hinzu gezählt (Zeile D2). Zum Zeitpunkt t_{K} wird der letzte Sub-Channel von Detektorelement #1 erfasst, die Zählrate N_{1K} ermittelt und Speicherzelle #j+K zugewiesen (Zeile D3). Zum Zeitpunkt t_{K+1} wird der erste Sub-Channel von Detektorelement #2 erreicht. Die Zählrate N21 wird zu Speicherzelle #j+1 addiert (Zeile D4).

Figur 11-3 veranschaulicht die Wirkungsweise des Sub-Channel-Verfahrens für den Fall, dass die einzelnen Detektorelemente beispielsweise in 5 virtuelle Signalkanäle aufgeteilt werden. Gezeigt werden in den Zeilen D1, D2, D3 und D4 die in den Speicherzellen aufsummierten Intensitäten für vier verschiedene zum Zeitpunkt t₀ angenommene Ortspositionen A1, A2, A3 und A4 des Materialstückes 1102. Die Belichtungsdauer entspricht der Zeit T. Unterscheidet sich die Ortsposition des Materialstückes 1102, wie den Fällen A1, A2, A3 und A4 dargestellt in Schritten um die Distanz p/5 nach rechts, dann werden im Datenspeicher die gemessenen Intensitäten ebenfalls um eine Speicherzelle nach rechts versetzt. Mit diesem Verfahren können also Änderungen der Röntgenphotonenintensität sogar noch innerhalb eines einzelnen Detektorelementes registriert werden.

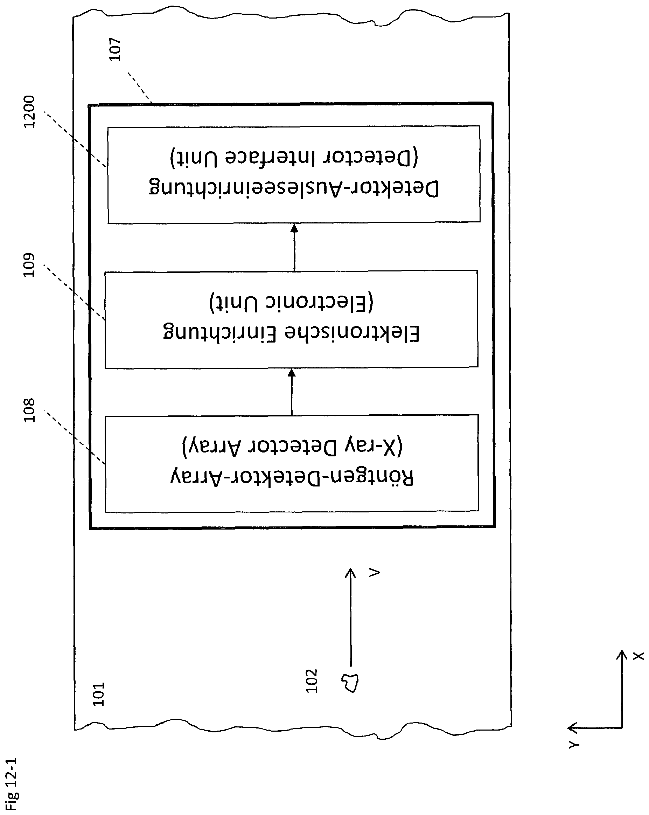

Figur 12-1 zeigt eine Ausführungsform der Vorrichtung, die dadurch gekennzeichnet ist, dass sich die Detektor-Ausleseeinrichtung 1200 vorzugsweise innerhalb des Detektorkopfes 107 befindet. In gewöhnlicher Weise wird zur Auslesung der digitalen Signale aus den Zählereinheiten, welches sich in der elektronischen Einrichtung 109 befinden, ein FPGA (="Field-programmable gate array") oder ein ASIC (="Application-specific integrated circuit") oder ein frei programmierbarer Controller verwendet.

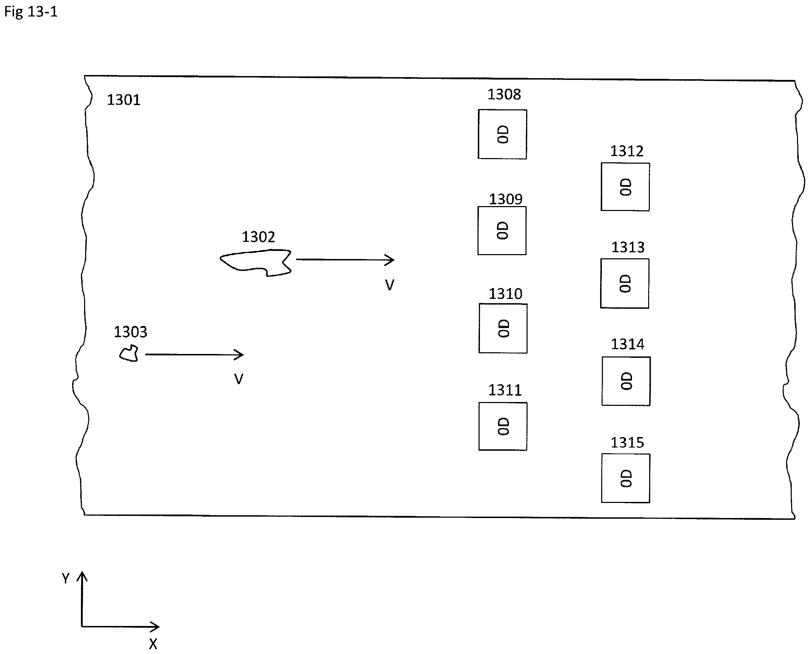

Figur 13-1 zeigt eine Ausführungsform der erfindungsgemäßen Vorrichtung, die dadurch gekennzeichnet ist, dass eine oder mehrere Gruppen von Detektorelementen nicht als ortsauflösender 1D-Detektor, sondern als ein flächig angeordneter OD-Detektor betrieben wird (werden). In dem dargestellten Beispiel werden die Materialstücke 1302 und 1303 durch das Fließband bewegt. Die Röntgen-Detektor-Arrays 1308 bis 1315 werden jeweils als 0D Detektor betrieben. Innerhalb eines Röntgen-Detektor-Array werden hierzu die Zählereignisse der einzelnen Detektorelemente zusammenaddiert und als ein einziger Messwert ausgegeben. Falls mehrere Energiefenster definiert wurden, wird für jedes Energiefenster ein solcher Messwert ermittelt und ausgegeben.

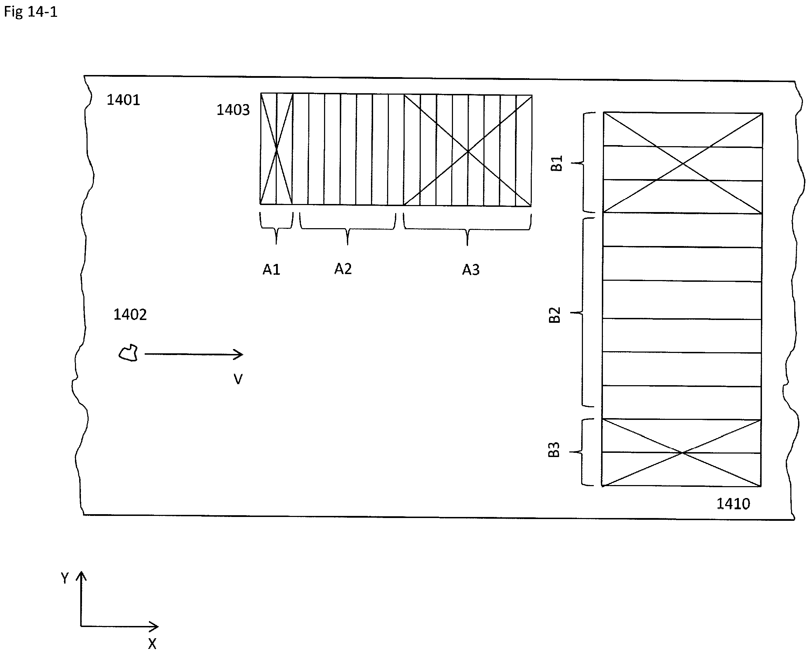

Figur 14-1 zeigt eine Ausführungsform der Erfindung, die dadurch gekennzeichnet ist, dass jedes einzelne Detektorelement einer Gruppe von Detektorelementen deaktivierbar ist. Beispielhaft wurden in den Gruppen 1403 und 1410 die Detektorelemente in den Bereichen A1, A3, B1 und B3 deaktiviert. Die aktive Fläche umfasst also nur noch die Bereiche A2 und B2.

### Haupt-Anwendungsgebiete

- Sortiervorrichtungen, Eingangs- und Prozesskontrolle für die Schrottverwertung
- Qualitäts- und Prozesskontrolle im Metallerz-Bergbau
- Sortiervorrichtungen, Eingangs- und Prozesskontrolle im Elektronik-Recycling

### Referenzliste:

Für die Beurteilung der Patentfähigkeit in Betracht gezogene Druckschriften:
[1] US 8,855,809 B2
[2] "Semiconductor Radiation Detectors", Gerhard Lutz, ISBN 3-540-64859-3
[3] "Mythen detector system", B. Schmitt et al, Nuclear Instruments and Methods in Physics Research A 501 (2003) 267-272
[4] "Position sensitive and energy dispersive x-ray detector based on silicon strip detector technology", P. Wi 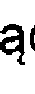 cek et al 2015 JINST 10 P04002

## Patentansprüche

1. Vorrichtung zur Identifizierung von Materialien, insbesondere Metallteilen wie Schrottpartikeln, auf einem Fließband (101) mittels Röntgenfluoreszenz mit einer Röntgen-Quelle (102), von der Röntgen-Strahlung (103) auf die zu untersuchenden Materialteile (104) auf dem Fließband (101) geführt wird, mit einem Detektorkopf (107), der ein Röntgen-Detektor-Array (108) enthält,
**dadurch gekennzeichnet,**
**dass** die Vorrichtung ein Röntgen-Detektor-Array (108) enthält, das eine Vielzahl von flächig angeordneten Detektorelementen (113, 114, 115) zum Empfang von an den Materialteilen gestreuter oder von diesen angeregter Röntgen-Strahlung (105) und deren Umwandlung in elektrische Ladungssignale aufweist, sowie eine elektronische Einrichtung (109) zum Auslesen und Verarbeiten der Ladungssignale aus den Detektorelementen (113, 114, 115), die für jedes einzelne Detektorelement (113, 114, 115) des Röntgen-Detektor-Arrays (108) einen Signalkanal (120) umfasst, der jeweils aufweist:
- eine Diskriminatoreinrichtung (117) mit mindestens zwei einstellbaren Komparatorschwellen (116, 122) zur Detektion aller Gaußkurven-artigen Signale (119), deren Amplitude größer ist als eine der beiden oder zeitgleich größer als beide Komparatorschwellen (116, 122),
- sowie eine Zählereinheit (118, 121) je Komparatorschwelle (116, 122) zur Umwandlung der analogen Gaußkurven-artigen Signale (119) in digitale Zählereignisse,
**dass** die einzelnen Detektorelemente (113, 114, 115) des Röntgen-Detektor-Arrays (108) eine Ortsauflösung von 50µm bis 500µm bei einer Sensitivität für Röntgenstrahlung in einem Energiebereich zwischen 500eV und 30keV, bei einer Energieauflösung von weniger als 0,5keV bei Zählraten von bis zu 100kcps und bezogen auf eine Energie von 8,04keV aufweisen,
**dass** die elektronische Einrichtung (109) für jedes einzelne Detektorelement (113, 114, 115) des Röntgen-Detektor-Arrays (108) einen Signalkanal (120) umfasst,
**dass** jede Diskriminatoreinrichtung (117) für ein bestimmtes Detektorelement (114) jeweils mit den Diskriminatoreinrichtungen (117) der diesem Detektorelement (114) räumlich unmittelbar benachbarten Detektorelemente (113, 115) elektrisch verbunden ist, wobei sämtliche Diskriminatoreinrichtungen (117) über eine digitale und/oder analoge Schaltung (140, 142, 144, 146) derart miteinander verschaltet sind, dass ein simultanes Auftreten von Signalen auf mehr als einem Detektorelement (113, 114, 115) erkannt und elektrisch gesondert behandelt werden kann,
**dass** die Komparatorschwellen jeder einzelnen Detektorelemente-Gruppe (603, 604, 605, 606, 607) unabhängig voneinander eingestellt werden können, und dass dadurch jeder Gruppe ein der mehrere individuelle Energiefenster (613) für die Detektion der auftreffenden Röntgenstrahlung zugewiesen werden können,
und **dass** einzelne Gruppen (1003) von Detektorelementen im TDI (="Time Delay Integration")-Modus synchron zur Momentan-Geschwindigkeit des Fließbandes betrieben werden.

2. Vorrichtung nach Anspruch 1, **dadurch gekennzeichnet, dass** die einzelnen flächig angeordneten Detektorelemente (202) streifenförmig, in mindestens eine (201), vorzugsweise mehrere (203, 204, 205) zueinander parallele oder kollineare (206, 207) Gruppen angeordnet und innerhalb einer Gruppe die einzelnen Streifen zueinander parallel ausgerichtet sind.

3. Vorrichtung nach Anspruch 2, **dadurch gekennzeichnet, dass** erste Gruppen von Detektorelementen (303, 304, 305, 306) orthogonal zur Fließbandrichtung und die einzelnen Streifen dieser Gruppe parallel zur Fließbandrichtung und/oder zweite Gruppen von Detektorelementen (307, 308, 309) parallel zur Fließbandrichtung und die einzelnen Streifen dieser Gruppe orthogonal zur Fließbandrichtung angeordnet sind.

4. Vorrichtung nach Anspruch 3, **dadurch gekennzeichnet, dass** das Röntgen-Detektor-Array aus einer Kombination von ersten (406, 407) und zweiten (403, 404, 405) Gruppen von Detektorelementen aufgebaut ist.

5. Vorrichtung nach einem der vorhergehenden Ansprüche, **dadurch gekennzeichnet, dass** zumindest einige der Detektorelemente (501) aus einem Siliziumstreifensensor mit einem Substrat (502) einer Dicke von mehr als 300µm, insbesondere 300µm bis 2mm, aufgebaut sind.

6. Vorrichtung nach einem der Ansprüche 1 bis 5, **dadurch gekennzeichnet, dass** die Diskriminatoreinrichtungen (722, 724, 726) benachbarter Kanäle (714, 716, 718) über eine Eliminationseinheit (723, 725) für Shared-Charges-Signale elektrisch miteinander verschaltet sind, dass eine jede dieser Eliminationseinheiten (723, 725) über eine parametrierbare VETO-Komparatorschwelle verfügt und dass die Eliminationseinheit (723, 725) bewirkt, dass in dem Röntgen-Detektor-Array eintreffende Röntgenphotonen (701) jeweils dann nicht als Ereignis gezählt werden, wenn diese zur Folge haben, dass eine VETO-Schwelle (715, 717) von den elektrischen Ausgangssignalen (719, 720, 721) zweier benachbarten Signalkanäle überschritten wird.

7. Vorrichtung nach einem der Ansprüche 1 bis 5, **dadurch gekennzeichnet, dass** die Diskriminatoreinrichtungen (820, 822, 824) benachbarter Kanäle (814, 815, 816) über eine Korrektureinheit (821, 823) für Shared-Charges-Signale elektrisch miteinander verschaltet sind, und dass diese Korrektureinheit simultan auftretende Gaußkurven-ähnliche Ausgangssignale (817, 818, 819) in benachbarten Kanälen erkennt, in einem solchen Fall die Summe der Ausgangssignalamplituden bildet, das ermittelte Summensignal als ein einziges Ereignis demjenigen Kanal zuweist, welcher die höchste Signalamplitude zeigte und in dem anderen Kanal die Registrierung des Ausgangssignales unterdrückt.

8. Vorrichtung nach einem der vorhergehenden Ansprüche, **dadurch gekennzeichnet, dass** das Röntgen-Detektor-Array aus n>2 ersten Gruppen (915, 916, 917; 922, 923, 924) mit jeweils gleichem Streifen-Abstand aufgebaut ist, wobei die Streifen von einer Gruppe zur nächsten Gruppe um die Distanz des Streifen-Abstands dividiert durch n versetzt angeordnet sind.

9. Vorrichtung nach einem der vorhergehenden Ansprüche, **dadurch gekennzeichnet, dass** für einzelne Gruppen (1103) von Detektorelementen das Sub-Channel-Verfahren angewandt wird, welches die Zählereignisse jedes einzelnen physikalischen Detektorelements in mehr als zwei virtuelle Signalkanäle aufteilt.

10. Vorrichtung nach einem der vorhergehenden Ansprüche, **dadurch gekennzeichnet, dass** zur Auslesung der digitalen Signale aus den Zählereinheiten (118, 121) ein FPGA (="Field-programmable gate array") oder ein ASIC (="Application-specific integrated circuit") oder ein frei programmierbarer Controller vorgesehen ist, jeweils vorzugsweise im Detektorkopf (107) integriert.

11. Vorrichtung nach einem der vorhergehenden Ansprüche, **dadurch gekennzeichnet, dass** eine oder mehrere Gruppen von Detektorelementen (1308-1315) nicht als ortsauflösender 1D-Detektor, sondern als ein flächig angeordneter OD-Detektor betrieben wird (werden), indem die Zählereignisse aller einzelnen Detektorelemente innerhalb dieser Gruppe(n) zusammenaddiert und als ein einziger Messwert ausgegeben werden.

12. Vorrichtung nach einem der vorhergehenden Ansprüche, **dadurch gekennzeichnet, dass** jedes einzelne Detektorelement einer Gruppe (1403, 1410) von Detektorelementen deaktivierbar ist.

13. Vorrichtung nach einem der vorhergehenden Ansprüche, **dadurch gekennzeichnet, dass** der Röntgendetektor so gestaltet ist, dass er kontinuierlich mindestens 2000 Einzelmessungen pro Sekunde durchführen kann.

## Claims

1. A device for identifying materials, in particular metal parts such as scrap particles, on a conveyor belt (101) by means of X-ray fluorescence comprising an X-ray source (102), from which X-ray radiation (103) is guided onto the material parts (104) to be examined on the conveyor belt (101), comprising a detector head (107) containing an X-ray detector array (108),
**characterized in**
**that** the device comprises an X-ray detector array (108) having a multiplicity of detector elements (113, 114, 115) arranged in a planar fashion for receiving X-ray radiation (105) scattered at the material parts or excited by the latter and for converting said X-ray radiation into electrical charge signals, and also an electronic unit (109) for reading out and processing the charge signals from the detector elements (113, 114, 115), which comprises for each individual detector element (113, 114, 115) of the X-ray detector array (108) a signal channel (120) having in each case:
- a discriminator unit (117) having at least two adjustable discriminator thresholds (116, 122) for detecting all Gaussian curve-like signals (119) whose amplitude is greater than one of the two or simultaneously greater than both discriminator thresholds (116, 122),
- and also one counting unit (118, 121) per discriminator threshold (116, 122) for converting the analog Gaussian curve-like signals (119) into digital counting events,
**that** the individual detector elements (113, 114, 115) of the X-ray detector array (108) have a spatial resolution of 50 µm to 500 µm with a sensitivity to X-ray radiation in an energy range of between 500 eV and 30 keV, with an energy resolution of less than 0.5 keV at counting rates of up to 100 kcps and with respect to an energy of 8.04 keV,
**that** the electronic unit (109) comprises a signal channel (120) for each individual detector element (113, 114, 115) of the X-ray detector array (108),
**that** each discriminator unit (117) for a specific detector element (114) is in each case electrically connected to the discriminator units (117) of the detector elements (113, 115) that are spatially directly adjacent to said detector element (114), wherein all the discriminator units (117) are interconnected with one another via a digital and/or analog circuit (140, 142, 144, 146) in such a way that simultaneous occurrence of signals on more than one detector element (113, 114, 115) can be identified and treated electrically separately,
**that** the discriminator thresholds of each individual detector element group (603, 604, 605, 606, 607) can be set independently of one another, and that as a result each group can be allocated one or a plurality of individual energy windows (613) for the detection of the impinging X-ray radiation,
and **that** individual groups (1003) of detector elements in the TDI (= "Time Delay Integration") mode are operated synchronously with the instantaneous speed of the conveyor belt.

2. The device as claimed in claim 1, **characterized in that** the individual detector elements (202) arranged in a planar fashion are arranged in a strip-shaped fashion, in at least one (201), preferably a plurality (203, 204, 205) of groups parallel or collinear (206, 207) with respect to one another, and within a group the individual strips are aligned parallel to one another.

3. The device as claimed in claim 2, **characterized in that** first groups of detector elements (303, 304, 305, 306) are arranged orthogonally with respect to the conveyor belt direction and the individual strips of said group are arranged parallel to the conveyor belt direction and/or second groups of detector elements (307, 308, 309) are arranged parallel to the conveyor belt direction and the individual strips of said group are arranged orthogonally with respect to the conveyor belt direction.

4. The device as claimed in claim 3, **characterized in that** the X-ray detector array is constructed from a combination of first (406, 407) and second (403, 404, 405) groups of detector elements.

5. The device as claimed in any of the preceding claims, **characterized in that** at least some of the detector elements (501) are constructed from a silicon strip sensor having a substrate (502) with a thickness of more than 300 µm, in particular 300 µm to 2 mm.

6. The device as claimed in any of claims 1 to 5, **characterized in that** the discriminator units (722, 724, 726) of adjacent channels (714, 716, 718) are electrically interconnected with one another via an elimination unit (723, 725) for shared charges signals, that each of said elimination units (723, 725) has a parameterizable VETO discriminator threshold, and that the elimination unit (723, 725) has the effect that X-ray photons (701) arriving in the X-ray detector array are in each case not counted as an event if they have the consequence that a VETO threshold (715, 717) is exceeded by the electrical output signals (719, 720, 721) of two adjacent signal channels.

7. The device as claimed in any of claims 1 to 5, **characterized in that** the discriminator units (820, 822, 824) of adjacent channels (814, 815, 816) are electrically interconnected with one another via a correction unit (821, 823) for shared charges signals, and that said correction unit identifies simultaneously occurring Gaussian curve-like output signals (817, 818, 819) in adjacent channels, in such a case forms the sum of the output signal amplitudes, allocates the summation signal determined as a single event to that channel which exhibited the highest signal amplitude, and suppresses the registration of the output signal in the other channel.

8. The device as claimed in any of the preceding claims, **characterized in that** the X-ray detector array is constructed from n>2 first groups (915, 916, 917; 922, 923, 924) having in each case an identical strip spacing, wherein the strips are arranged offset from one group to the next group by the distance of the strip spacing divided by n.

9. The device as claimed in any of the preceding claims, **characterized in that** the sub-channel method is applied to individual groups (1103) of detector elements, said method dividing the counting events of each individual physical detector element into more than two virtual signal channels.

10. The device as claimed in any of the preceding claims, **characterized in that** for reading out the digital signals from the counting units (118, 121), an FPGA (= "Field-programmable gate array") or an ASIC (= "Application-specific integrated circuit") or a freely programmable controller is provided, in each case in a manner preferably integrated in the detector head (107).

11. The device as claimed in any of the preceding claims, **characterized in that** one or a plurality of groups of detector elements (1308-1315) is (are) not operated as a spatially resolving 1D detector, but rather as a 0D detector arranged in a planar fashion, by virtue of the fact that the counting events of all the individual detector elements within said group(s) are added together and output as a single measurement value.

12. The device as claimed in any of the preceding claims, **characterized in that** each individual detector element of a group (1403, 1410) of detector elements is deactivatable.

13. The device as claimed in any of the preceding claims, **characterized in that** the X-ray detector is configured such that it can carry out continuously at least 2000 individual measurements per second.

## Revendications

1. Arrangement pour identifier des matériaux, notamment des pièces métalliques telles que des particules de ferraille, sur une chaîne de montage (101) au moyen de la fluorescence aux rayons X avec une source de rayons X (102), de laquelle des rayons X (103) sont guidés sur les pièces de matériau (104) à examiner sur la chaîne de montage (101), comprenant une tête de détection (107) qui contient un réseau de détecteurs de rayons X (108),
**caractérisé en ce**
**que** l'arrangement contient un réseau de détecteurs de rayons X (108) qui possède une pluralité d'éléments détecteurs (113, 114, 115) disposés à plat destinés à la réception des rayons X (105) diffusés au niveau des pièces de matériau ou excités par celles-ci et à leur conversion en signaux de charge électriques, ainsi qu'un dispositif électronique (109) destiné à lire et à traiter les signaux de charge provenant des éléments détecteurs (113, 114, 115), lequel comporte un canal de signal (120) pour chaque élément détecteur (113, 114, 115) individuel du réseau de détecteurs de rayons X (108), qui possède respectivement :
- un dispositif discriminateur (117) ayant au moins deux seuils de comparateur (116, 122) réglables destiné à la détection de tous les signaux de type courbe de Gauss (119) dont l'amplitude est supérieure à l'un des deux ou simultanément supérieure aux deux seuils de comparateur (116, 122),
- ainsi qu'une unité de comptage (118, 121) par seuil de comparateur (116, 122), destinée à la conversion des signaux de type courbe de Gauss (119) analogiques en résultats de comptage numériques,
en ce que les éléments détecteurs (113, 114, 115) du réseau de détecteurs de rayons X (108) présentent une résolution spatiale de 50 µm à 500 µm avec une sensibilité aux rayons X dans une plage d'énergie entre 500 eV et 30 keV, avec une résolution d'énergie inférieure à 0,5 keV à des fréquences de comptage jusqu'à 100 kcps et en référence à une énergie de 8,04 keV,
en ce que le dispositif électronique (109) comprend un canal de signal (120) pour chaque élément détecteur (113, 114, 115) individuel du réseau de détecteurs de rayons X (108),
en ce que chaque dispositif discriminateur (117), pour un élément détecteur (114) déterminé, est respectivement relié électriquement aux dispositifs discriminateurs (117) des éléments détecteurs (113, 115) directement voisins dans l'espace de cet élément détecteur (114), tous les dispositifs discriminateurs (117) étant interconnectés entre eux par le biais d'un circuit numérique et/ou analogique (140, 142, 144, 146) de telle sorte qu'une apparition simultanée de signaux sur plus d'un élément détecteur (113, 114, 115) peut être reconnue et traitée électriquement séparément,
en ce que les seuils de comparateur de chaque groupe d'éléments détecteurs (603, 604, 605, 606, 607) individuels peuvent être réglés indépendamment les uns des autres, et en ce que l'une des plusieurs fenêtres d'énergie (613) individuelles peut être attribuée à chaque groupe pour la détection des rayons X qui surviennent,
et en ce les groupes (1003) individuels d'éléments détecteurs fonctionnent en mode TDI (Time Delay Integration - Intégration avec retard dans le temps) de manière synchrone avec la vitesse momentanée de la chaîne de montage.

2. Arrangement selon la revendication 1, **caractérisé en ce que** les éléments détecteurs (202) disposés à plat individuels sont disposés en forme de bande en au moins un (201), de préférence plusieurs (203, 204, 205) groupes parallèles ou colinéaires (206, 207) les uns par rapport aux autres et les bandes individuelles sont orientées parallèlement les unes aux autres au sein d'un groupe.

3. Arrangement selon la revendication 2, **caractérisé en ce que** des premiers groupes d'éléments détecteurs (303, 304, 305, 306) sont disposés orthogonalement à la direction de la chaîne de montage et les bandes individuelles de ces groupes parallèlement à la direction de la chaîne de montage et/ou des deuxièmes groupes d'éléments détecteurs (307, 308, 309) parallèlement à la direction de la chaîne de montage et les bandes individuelles de ces groupes orthogonalement à la direction de la chaîne de montage.

4. Arrangement selon la revendication 3, **caractérisé en ce que** le réseau de détecteurs de rayons X est constitué d'une combinaison de premiers (406, 407) et de deuxièmes (403, 404, 405) groupes d'éléments détecteurs.

5. Arrangement selon l'une des revendications précédentes, **caractérisé en ce qu'**au moins certains des éléments détecteurs (501) sont constitués d'un capteur à bande de silicium ayant un substrat (502) d'une épaisseur de plus de 300 µm, notamment de 300 µm à 2 mm.

6. Arrangement selon l'une des revendications 1 à 5, **caractérisé en ce que** les canaux (714, 716, 718) voisins des dispositifs discriminateurs (722, 724, 726) sont interconnectés électriquement entre eux par le biais d'une unité d'élimination (723, 725) pour des signaux de charge partagée, **en ce que** chacune de ces unités d'élimination (723, 725) dispose d'un seuil de comparateur VETO paramétrable et **en ce que** l'unité d'élimination (723, 725) a pour effet que les photons de rayons X (701) qui arrivent dans le réseau de détecteurs de rayons X ne sont respectivement pas comptés comme des événements lorsque ceux-ci ont pour conséquence qu'un seuil VETO (715, 717) est dépassé par les signaux de sortie électriques (719, 720, 721) de deux canaux de signal voisins.

7. Arrangement selon l'une des revendications 1 à 5, **caractérisé en ce que** les canaux (814, 815, 816) voisins des dispositifs discriminateurs (820, 822, 824) sont interconnectés électriquement entre eux par le biais d'une unité de correction (821, 823) pour des signaux de charge partagée, et **en ce que** cette unité de correction reconnaît des signaux de sortie (817, 818, 819) similaires à des courbes de Gauss qui se produisent simultanément dans des canaux voisins, dans un tel cas calcule la somme des amplitudes des signaux de sortie, affecte le signal total déterminé en tant qu'événement individuel au canal qui présente l'amplitude de signal la plus élevée et inhibe l'enregistrement du signal de sortie dans l'autre canal.

8. Arrangement selon l'une des revendications précédentes, **caractérisé en ce que** le réseau de détecteurs de rayons X est constitué de n > 2 premiers groupes (915, 916, 917 ; 922, 923, 924) avec respectivement un même écart entre bandes, les bandes d'un groupe étant disposées décalées par rapport au groupe suivant de l'écart entre bandes divisé par n.

9. Arrangement selon l'une des revendications précédentes, **caractérisé en ce que** le procédé du sous-canal est employé pour les groupes (1103) individuels d'éléments détecteurs, lequel répartit les événements de comptage de chaque élément détecteur physique individuel en plus de deux canaux de signal virtuels.

10. Arrangement selon l'une des revendications précédentes, **caractérisé en ce qu'**un FGPA (Field-programmable gate array - Réseau de portes programmables sur site) ou un ASIC (Application-specific integrated circuit - Circuit intégré spécifique à une application) ou encore un contrôleur programmable librement est prévu pour la lecture des signaux numériques en provenance des unités de comptage (118, 121), respectivement de préférence intégré dans la tête de détection (107).

11. Arrangement selon l'une des revendications précédentes, **caractérisé en ce qu'**un ou plusieurs groupes d'éléments détecteurs (1308-1315) ne fonctionne(nt) pas en tant que détecteur 1D à résolution spatiale, mais en tant que détecteur 0D disposé à plat **en ce que** les résultats de comptage de tous les éléments détecteurs individuels au sein de ce ou de ces groupes sont additionnés entre eux et délivrés en tant que valeur mesurée unique.

12. Arrangement selon l'une des revendications précédentes, **caractérisé en ce que** chaque élément détecteur individuel d'un groupe (1403, 1410) d'éléments détecteurs peut être désactivé.

13. Arrangement selon l'une des revendications précédentes, **caractérisé en ce que** le détecteur de rayons X est configuré de telle sorte qu'il peut effectuer continuellement au moins 2000 mesures individuelles par seconde.
